(19) Europäisches Patentamt
European Patent Office
Office européen des brevets

(11) **EP 4 130 092 A1**

(12) **EUROPEAN PATENT APPLICATION**
published in accordance with Art. 153(4) EPC

(43) Date of publication:
**08.02.2023 Bulletin 2023/06**

(21) Application number: **21781710.5**

(22) Date of filing: **12.03.2021**

(51) International Patent Classification (IPC):
***C08G 59/44*** *(1974.07)* ***C08J 5/24*** *(1974.07)*

(52) Cooperative Patent Classification (CPC):
**C08G 59/44; C08J 5/24;** Y02E 60/32

(86) International application number:
**PCT/JP2021/009997**

(87) International publication number:
**WO 2021/200028 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2020 JP 2020066110**
**01.04.2020 JP 2020066122**

(71) Applicant: **MITSUBISHI GAS CHEMICAL COMPANY, INC.**
**Chiyoda-ku**
**Tokyo 100-8324 (JP)**

(72) Inventors:
- **IKEUCHI, Kousuke**
  **Hiratsuka-shi, Kanagawa 254-0016 (JP)**
- **MATSUMOTO, Nobuhiko**
  **Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

(54) **PREPREG, FIBER-REINFORCED COMPOSITE MATERIAL, HIGH-PRESSURE GAS STORAGE TANK, METHOD FOR PRODUCING PREPREG, AND METHOD FOR PRODUCING HIGH-PRESSURE GAS STORAGE TANK**

(57) Provided are a prepreg in which reinforcing fibers are impregnated with an epoxy resin composition containing an epoxy resin (A) and an epoxy resin curing agent (B) containing a reaction product (X) of a component (x1) and a component (x2) described below, a fiber-reinforced composite material that is a cured product of the prepreg, a method for producing the prepreg, and a method for producing a high-pressure gas storage tank.
(x1) At least one selected from the group consisting of meta-xylylenediamine and para-xylylenediamine.
(x2) At least one selected from the group consisting of unsaturated carboxylic acids represented by General Formula (1) below and derivatives thereof.

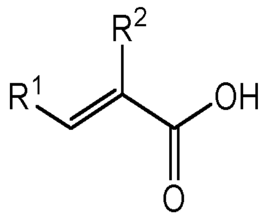

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

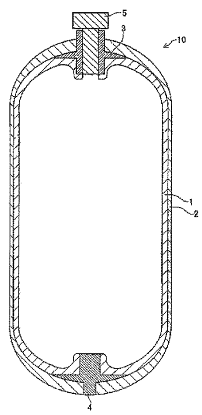


FIG. 1

EP 4 130 092 A1

## Description

Technical Field

The present invention relates to a prepreg, a fiber-reinforced composite material that is a cured product of the prepreg, a high-pressure gas storage tank in which the fiber-reinforced composite material is used, a method for producing the prepreg, and a method for producing the high-pressure gas storage tank.

Background Art

In recent years, use of environmentally-friendly natural gas vehicles (CNG vehicles) and fuel cell vehicles (FCV) has become more widespread. Fuel cell vehicles are powered by fuel cells in which hydrogen is used as fuel, and thus the establishment of hydrogen stations at which vehicles are filled with hydrogen that is compressed to a high pressure is essential.

Thus far, tanks made of steel have been used as high-pressure gas storage tanks that are used for hydrogen stations for fuel cell vehicles, or in other words, as vehicle-mounted fuel tanks for vehicles such as CNG vehicles and fuel cell vehicles. However, the development of lighter weight high-pressure gas storage tanks in which a resin material is used in the liner, or in the outer layer of the tank, is advancing. Reducing the weight of a vehicle-mounted fuel tank results in merits such as an improvement in the fuel economy of the vehicle in which the fuel tank is mounted.

Use of a resin having gas barrier properties and a fiber-reinforced composite material (FRP) in which reinforcing fibers are impregnated with the resin as a resin material constituting a high-pressure gas storage tank is known.

For example, Patent Document 1 discloses a resin liner containing a resin such as nylon as a main material having gas barrier properties and an elastomer containing an additive having hydrogen adsorption performance, and also discloses a high-pressure hydrogen tank having an FRP layer laminated on an outer peripheral surface thereof.

Patent Document 2 discloses a pressure vessel that includes a liner and an outer layer of the liner, with the outer layer being constituted of a composite material containing continuous fibers and a predetermined polyamide resin having gas barrier properties and infiltrated into the continuous fibers, and also discloses a liner constituted of the composite material.

Patent Document 3 discloses a structure including: a cured layer containing a cured product of a resin composition containing mica and a thermosetting resin such as an epoxy monomer that has a mesogenic group in the molecule and can form a smectic structure; and a carbon fiber-containing layer on one or both sides of the cured layer, the structure being a coating of a high-pressure hydrogen storage tank. Patent Document 3 also indicates that the hydrogen gas barrier property is improved by a labyrinth effect of mica by increasing the content of the mica in the resin composition.

Citation List

Patent Documents

Patent Document 1: JP 2010-276146 A
Patent Document 2: WO 2016/084475
Patent Document 3: WO 2017/175775

Summary of Invention

Technical Problem

The liner of a high-pressure hydrogen storage tank, or a coating material that is an outer layer of the liner, is required to have hydrogen gas barrier properties as well as excellent elongation from the viewpoints of pressure resistance and impact resistance.

The coating of the high-pressure hydrogen storage tank disclosed in Patent Document 3 contains carbon fibers and a cured product of a resin composition containing mica and a thermosetting resin such as an epoxy monomer, and by reinforcing the thermosetting resin with carbon fibers, a high-strength material that can be applied to even a high-pressure hydrogen storage tank is obtained.

However, in general, the elongation rate of a cured product of an epoxy resin composition is low, and the elongation of a cured product of an epoxy resin composition to which an inorganic filler such as mica and reinforcing fibers such as carbon fiber are added decreases significantly, and the cured product thereof tends to be inferior in impact

resistance.

Thus, a first problem to be addressed by the present invention is to achieve both impact resistance and gas barrier properties such as a hydrogen gas barrier property in a prepreg having reinforcing fibers impregnated with an epoxy resin composition, and also in a fiber-reinforced composite material that is a cured product of the prepreg.

Also, as a method for producing a pressure vessel having a liner and an outer layer of the liner with the outer layer being constituted of a composite material containing reinforcing fibers and a matrix resin, a method is known in which a filament winding method or a tape winding method is used to wind the composite material around the outer periphery of the liner to form the outer layer (Patent Document 2).

A winding method can be similarly employed in a case where the matrix resin in the composite material is a cured product of a thermosetting resin rather than a thermoplastic resin. In this case, continuous reinforcing fiber bundles are impregnated with the thermosetting resin, and the resulting product (tow prepreg) is wrapped around the outer periphery of the liner, and then heated, cured, and molded.

At this time, from the viewpoint of increasing impregnation properties for the reinforcing fibers, the reinforcing fibers can be impregnated with a resin composition in which the thermosetting resin has been diluted with a solvent or the like. However, when the amount of solvent remaining in the obtained prepreg is large, voids and pinholes may occur during winding and molding, and these may cause molding defects. On the other hand, it has been discovered that when a prepreg is excessively heated and dried in order to remove the solvent, the resin adhesiveness when winding and molding decreases. This phenomenon becomes remarkable especially when a rapid-curing thermosetting resin is used.

A second problem to be addressed by the present invention is to provide a method for producing a prepreg, the method including a step of impregnating reinforcing fibers with an epoxy resin composition containing an epoxy resin, a predetermined epoxy resin curing agent, and a solvent, the method enabling the production of a prepreg that has minimal occurrence of voids, pinholes, and the like during molding and exhibits excellent resin adhesiveness when used in winding and molding, and to also provide a method for producing a high-pressure gas storage tank.

Solution to Problem

The present inventors discovered that a prepreg that has reinforcing fibers impregnated with an epoxy resin composition containing an epoxy resin and a predetermined epoxy resin curing agent, and a fiber-reinforced composite material that is a cured product of the epoxy resin composition can solve the first problem.

The present inventors also discovered that a prepreg production method including a step of removing the solvent through drying at predetermined conditions after the reinforcing fibers have been impregnated with the predetermined epoxy resin composition containing a solvent can solve the second problem.

That is, the present invention relates to the following aspects [1] to [5].

[1] A prepreg in which reinforcing fibers are impregnated with an epoxy resin composition containing an epoxy resin (A) and an epoxy resin curing agent (B) containing a reaction product (X) of a component (x1) and a component (x2) described below.

(x1) At least one selected from the group consisting of meta-xylylenediamine and para-xylylenediamine.
(x2) At least one selected from the group consisting of unsaturated carboxylic acids represented by General Formula (1) below and derivatives thereof.

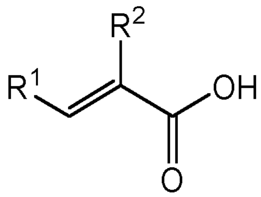

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

[2] A method for producing a prepreg, the method including steps (I) to (III) described below.

Step (I): Preparing an epoxy resin composition containing an epoxy resin (A), an epoxy resin curing agent (B) containing a reaction product (X) of a component (x1) and a component (x2) described below, and a solvent.

(x1) At least one selected from the group consisting of meta-xylylenediamine and para-xylylenediamine.
(x2) At least one selected from the group consisting of unsaturated carboxylic acids represented by General Formula (1) below and derivatives thereof.

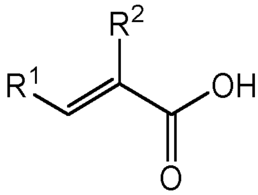

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

Step (II): Impregnating reinforcing fibers with the epoxy resin composition to obtain an undried prepreg.
Step (III): Drying the undried prepreg under conditions satisfying Relational Expression (i) below, to remove the solvent.

$$8000 \leq (K \times T)/W \leq 30000 \cdots (i)$$

K: drying temperature (K)
T: drying time (seconds)
W: thickness (mm) of undried prepreg.

[3] A fiber-reinforced composite material that is a cured product of the prepreg described in [1].
[4] A high-pressure gas storage tank in which the fiber-reinforced composite material described in [3] is used.
[5] A method for producing a high-pressure gas storage tank including a liner and an outer layer formed from a fiber-reinforced composite material, the method including, in order, steps (Ia) to (IVa) described below.

Step (Ia): Preparing an epoxy resin composition containing an epoxy resin (A), an epoxy resin curing agent (B) containing a reaction product (X) of a component (x1) and a component (x2) described below, and a solvent

(x1) At least one selected from the group consisting of meta-xylylenediamine and para-xylylenediamine.
(x2) At least one selected from the group consisting of unsaturated carboxylic acids represented by General Formula (1) below and derivatives thereof.

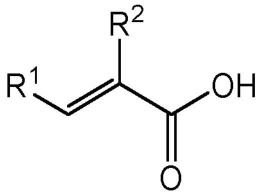

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)
Step (IIa): Impregnating continuous fiber bundles with the epoxy resin composition to obtain an undried tow prepreg.
Step (IIIa): Drying the undried tow prepreg under conditions satisfying Relational Expression (ia) below to remove the solvent and obtain a tow prepreg.

$$8000 \leq (K \times T)/Wa \leq 30000 \cdots (ia)$$

K: drying temperature (°C)
T: drying time (seconds)

Wa: Thickness (mm) of undried tow prepreg
Step (IVa): Wrapping the tow prepreg around an outer surface of the liner and then heating to form the outer layer formed from the fiber-reinforced composite material.

Note that in the following description, the invention pertaining to the prepreg, the fiber-reinforced composite, and the high-pressure gas storage tank is also referred to as a "first invention", and the invention pertaining to the method for producing the prepreg and the method for producing the high-pressure gas storage tank is also referred to as a "second invention".

Advantageous Effects of Invention

According to the first invention, a prepreg and a fiber-reinforced composite material that can achieve both impact resistance and gas barrier properties such as a hydrogen gas barrier property can be provided. The fiber-reinforced composite, which is a cured product of the first invention, has high gas barrier properties and impact resistance, and for example, is suitable as a material constituting a high-pressure gas storage tank.
According to the second invention, a method for producing a prepreg that has minimal occurrence of voids, pinholes, and the like during molding and exhibits excellent resin adhesiveness when used in winding and molding, and a method for producing a high-pressure gas storage tank can be provided.

Brief Description of Drawings

FIG. 1 is a cross-sectional schematic view illustrating an embodiment of a high-pressure gas storage tank of the present invention.

Description of Embodiments

[Prepreg]

A prepreg according to the first invention is a prepreg in which reinforcing fibers are impregnated with an epoxy resin composition containing an epoxy resin (A) and an epoxy resin curing agent (B) containing a reaction product (X) of a component (x1) and a component (x2) described below. Hereinafter, the prepreg according to the first invention is also referred to simply as a "prepreg of the present invention".

(x1) At least one selected from the group consisting of meta-xylylenediamine and para-xylylenediamine.
(x2) At least one selected from the group consisting of unsaturated carboxylic acids represented by General Formula (1) below and derivatives thereof.

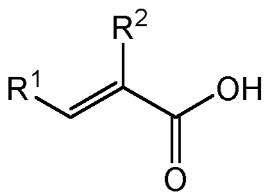
(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

The prepreg of the present invention has the constitution described above, and thereby both impact resistance and gas barrier properties such as a hydrogen gas barrier property can be achieved with the fiber-reinforced composite material (hereinafter, also referred to simply as a "composite material").
The reason why the prepreg of the present invention and a composite material that is a cured product thereof exhibit the abovementioned effects is not clear. However, it is thought that because the epoxy resin composition used in the prepreg contains the reaction product (X) as an epoxy resin curing agent, the resulting cured product excels in gas barrier properties such as a hydrogen gas barrier property and also exhibits good elongation, and thus the impact resistance is improved. Furthermore, the cured product also exhibits excellent interfacial adhesiveness with the reinforcing fibers, and therefore it is assumed that the impact resistance of the resulting composite material is further improved.
The epoxy resin composition and reinforcing fibers used in the prepreg of the present invention will be described.

<Epoxy resin composition>

The epoxy resin composition used in the present invention contains an epoxy resin (A) and an epoxy resin curing agent (B) containing a reaction product (X) of a component (x1) and a component (x2) described below. The epoxy resin composition preferably further contains a solvent.

(x1) At least one selected from the group consisting of meta-xylylenediamine and para-xylylenediamine.
(x2) At least one selected from the group consisting of unsaturated carboxylic acids represented by General Formula (1) below and derivatives thereof.

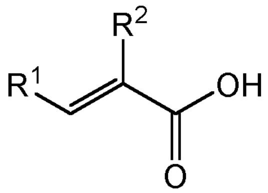

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

(Epoxy resin (A))

The epoxy resin (A) (hereinafter, also referred to simply as a "component (A)") is not particularly limited as long as it is a polyfunctional epoxy resin having two or more epoxy groups, but a polyfunctional epoxy resin containing an aromatic ring or an alicyclic structure in the molecule is preferred when consideration is given to the expression of high gas barrier properties.

Specific examples of the polyfunctional epoxy resin include at least one resin selected from epoxy resins having a glycidylamino group derived from meta-xylylenediamine, epoxy resins having a glycidylamino group derived from para-xylylenediamine, epoxy resins having a glycidylamino group derived from 1,3-bis(aminomethyl) cyclohexane, epoxy resins having a glycidylamino group derived from 1,4-bis(aminomethyl) cyclohexane, epoxy resins having a glycidylamino group derived from diaminodiphenylmethane, epoxy resins having a glycidylamino group and/or a glycidyloxy group derived from a para-aminophenol, epoxy resins having a glycidyloxy group derived from bisphenol A, epoxy resins having a glycidyloxy group derived from bisphenol F, epoxy resins having a glycidyloxy group derived from a phenol novolac, and epoxy resins having a glycidyloxy group derived from resorcinol. In order to improve various performance aspects such as flexibility, impact resistance, and moist heat resistance, two or more types of the epoxy resins described above may be mixed at appropriate ratios and used.

Of the abovementioned polyfunctional epoxy resins, from the viewpoint of gas barrier properties, the epoxy resin (A) is preferably one having, as a main component, at least one component selected from the group consisting of an epoxy resin having a glycidylamino group derived from meta-xylylenediamine, an epoxy resin having a glycidylamino group derived from para-xylylenediamine, and an epoxy resin having a glycidyloxy group derived from bisphenol F, and is more preferably one having, as a main component, an epoxy resin having a glycidylamino group derived from meta-xylylenediamine.

Note that "main component" here means that other components may be included within a range that does not depart from the spirit of the present invention, and also means a component that is included in an amount of preferably from 50 to 100 mass%, more preferably from 70 to 100 mass%, and even more preferably from 90 to 100 mass% relative to the total amount.

(Epoxy resin curing agent (B))

From the viewpoints of expressing both high gas barrier properties and impact resistance in the prepreg and the composite material, the epoxy resin curing agent (B) (hereinafter, also referred to simply as a "component (B)") contains an epoxy resin curing agent (B) containing a reaction product (X) of a component (x1) and a component (x2) described below.

(x1) At least one selected from the group consisting of meta-xylylenediamine and para-xylylenediamine.
(x2) At least one selected from the group consisting of unsaturated carboxylic acids represented by General Formula (1) below and derivatives thereof.

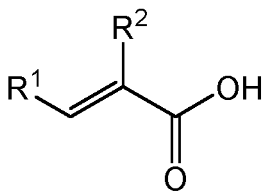

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

(Reaction product (X))

The reaction product (X) is a reaction product of the component (x1) and the component (x2).

The component (x1) is used from the viewpoint of gas barrier properties and is preferably meta-xylylenediamine in terms of gas barrier properties. One type of the component (x1) may be used alone, or two types of the components (x1) may be mixed and used.

The component (x2) is at least one selected from the group consisting of unsaturated carboxylic acids represented by General Formula (1) above and derivatives thereof. Moreover, from the viewpoint of expressing high gas barrier properties and impact resistance in the prepreg and composite material, $R^1$ in General Formula (1) above is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Moreover, from the viewpoint of expressing high gas barrier properties and impact resistance in the prepreg and composite material, $R^2$ in General Formula (1) is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Examples of the derivatives of the unsaturated carboxylic acids represented by General Formula (1) include esters, amides, acid anhydrides, and acid chlorides of the unsaturated carboxylic acids. The ester of the unsaturated carboxylic acid is preferably an alkyl ester, and in terms of obtaining good reactivity, the alkyl has preferably from 1 to 6 carbons, more preferably from 1 to 3 carbons, and even more preferably from 1 to 2 carbons.

Examples of the unsaturated carboxylic acids represented by General Formula (1) above and the derivatives thereof include unsaturated carboxylic acids, such as acrylic acid, methacrylic acid, α-ethylacrylic acid, α-propylacrylic acid, α-isopropylacrylic acid, α-n-butylacrylic acid, α-t-butylacrylic acid, α-pentylacrylic acid, α-phenylacrylic acid, α-benzylacrylic acid, crotonic acid, 2-pentenoic acid, 2-hexenoic acid, 4-methyl-2-pentenoic acid, 2-heptenoic acid, 4-methyl-2-hexenoic acid, 5-methyl-2-hexenoic acid, 4,4-dimethyl-2-pentenoic acid, 4-phenyl-2-butenoic acid, cinnamic acid, o-methyl cinnamic acid, m-methyl cinnamic acid, p-methyl cinnamic acid, and 2-octenoic acid; and esters, amides, acid anhydrides, and acid chlorides of these unsaturated carboxylic acids.

Among the above, from the viewpoint of expressing high gas barrier properties and impact resistance in the prepreg and composite material, the component (x2) is preferably at least one selected from the group consisting of acrylic acid, methacrylic acid, crotonic acid, and derivatives of these acids, more preferably at least one selected from the group consisting of acrylic acid, methacrylic acid, crotonic acid, and alkyl esters of these acids, even more preferably at least one selected from the group consisting of acrylic acid, methacrylic acid, and alkyl esters of these acids, still more preferably an alkyl ester of acrylic acid, and still even more preferably methyl acrylate.

One type of the component (x2) may be used alone, or two or more types may be combined and used.

When an unsaturated carboxylic acid, an ester, or an amide is used as the component (x2), the reaction between the component (x1) and the component (x2) is carried out by mixing the component (x1) and the component (x2) under conditions including a temperature of from 0 to 100°C and more preferably 0 to 70°C, and carrying out a Michael addition reaction and an amide group formation reaction by dehydration, dealcoholization, and deamination under conditions including a temperature of from 100 to 300°C and preferably from 130 to 250°C.

In this case, in the amide group formation reaction, to complete the reaction, the pressure inside a reaction device can be reduced at the final stage of the reaction as necessary. In addition, a non-reactive solvent can be used to dilute as necessary. Furthermore, a catalyst, such as a phosphite ester, can be added as a dehydrating agent or a dealcoholizing agent.

On the other hand, when an acid anhydride or an acid chloride of an unsaturated carboxylic acid is used as the component (x2), the reaction is carried out by mixing under conditions including a temperature of from 0 to 150°C and preferably from 0 to 100°C, and then carrying out a Michael addition reaction and an amide group formation reaction. In this case, in the amide group formation reaction, to complete the reaction, the pressure inside a reaction device can

be reduced at the final stage of the reaction as necessary. In addition, a non-reactive solvent can be used to dilute as necessary. Furthermore, a tertiary amine, such as pyridine, picoline, lutidine, or trialkylamine, can be added.

The amide group moiety formed by the reaction between the component (x1) and the component (x2) has high cohesive force, and thus the cured product of the epoxy resin composition, in which the epoxy resin curing agent containing the reaction product of the component (x1) and the component (x2) is used, exhibits high gas barrier properties and good adhesiveness with the reinforcing fibers.

In the reaction product (X), a reaction molar ratio [(x2)/(x1)] of the component (x2) to the component (x1) is preferably in a range from 0.3 to 1.0, and more preferably in a range from 0.6 to 1.0. When the reaction molar ratio is 0.3 or more, a sufficient amount of the amide groups is produced in the epoxy resin curing agent, and the gas barrier properties and adhesiveness to the reinforcing fibers are exhibited at high levels. On the other hand, when the reaction molar ratio is in a range of 1.0 or less, the amount of amino groups necessary for reaction with the epoxy groups in the epoxy resin (A) is sufficient, and excellent thermal resistance and excellent solubility in an organic solvent are exhibited.

The reaction product (X) may be a reaction product of the components (x1) and (x2), and at least one compound selected from the group consisting of the following components (x3), (x4) and (x5).

(x3) At least one component selected from the group consisting of monovalent carboxylic acids represented by $R^3$-COOH and derivatives thereof (where $R^3$ represents a hydrogen atom, an alkyl group having from 1 to 7 carbons and which may have a hydroxyl group, or an aryl group having from 6 to 12 carbons)
(x4) A cyclic carbonate
(x5) A mono-epoxy compound having from 2 to 20 carbons

The component (x3) is a monovalent carboxylic acid represented by $R^3$-COOH or a derivative thereof and is used as necessary from the viewpoints of reducing reactivity between the epoxy resin (A) and the epoxy resin curing agent (B) containing the reaction product (X), and improving workability, pot life, and the like.

$R^3$ represents a hydrogen atom, an alkyl group having from 1 to 7 carbons and which may have a hydroxyl group, or an aryl group having from 6 to 12 carbons, and $R^3$ is preferably an alkyl group having from 1 to 3 carbons or a phenyl group.

Examples of derivatives of the monovalent carboxylic acid represented by $R^3$-COOH include esters, amides, acid anhydrides, and acid chlorides of the carboxylic acid. The ester of the carboxylic acid is preferably an alkyl ester, and the number of carbons of the alkyl is preferably from 1 to 6, more preferably from 1 to 3, and even more preferably 1 or 2.

Examples of the component (x3) include monovalent carboxylic acids such as formic acid, acetic acid, propionic acid, butyric acid, lactic acid, glycolic acid, and benzoic acid, and derivatives thereof.

One type of the component (x3) may be used alone, or two or more types may be combined and used.

The component (x4), which is a cyclic carbonate, is used as necessary from the viewpoints of reducing reactivity between the epoxy resin (A) and the epoxy resin curing agent (B) containing the reaction product (X), and improving workability, pot life, and the like.

From the viewpoint of reactivity with the component (x1), the component (x4) is preferably a cyclic carbonate that is a ring of six or fewer members. Examples include ethylene carbonate, propylene carbonate, glycerin carbonate, 1,2-butylene carbonate, vinylene carbonate, 4-vinyl-1,3-dioxolan-2-one, 4-methoxymethyl-1,3-dioxolan-2-one, and 1,3-dioxan-2-one. Among these, from the viewpoint of gas barrier properties, at least one selected from the group consisting of ethylene carbonate, propylene carbonate, and glycerin carbonate is preferable.

One type of the component (x4) may be used alone, or two or more types may be combined and used.

The mono-epoxy compound, which is the component (x5), is a mono-epoxy compound having from 2 to 20 carbons and is used as necessary, from the viewpoints of reducing reactivity between the epoxy resin (A) and the epoxy resin curing agent (B) containing the reaction product (X), and improving workability, pot life, and the like. From the viewpoint of gas barrier properties, the component (x5) is preferably a mono-epoxy compound having from 2 to 10 carbons and is more preferably a compound represented by the following Formula (2).

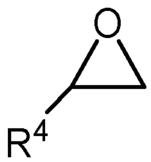
(2)

(In Formula (2), $R^4$ represents a hydrogen atom, an alkyl group having from 1 to 8 carbons, an aryl group, a chloromethyl group, or $R^5$-O-$CH_2$-, and $R^5$ represents a phenyl group or a benzyl group.)

Examples of the mono-epoxy compound represented by Formula (2) include ethylene oxide, propylene oxide,

1,2-butylene oxide, styrene oxide, epichlorohydrin, phenylglycidyl ether, and benzylglycidyl ether.

One type of the component (x5) may be used alone, or two or more types may be combined and used.

For a case where the component (x3), (x4), or (x5) is used in the reaction product (X), any one type of compound selected from the group consisting of the components (x3), (x4), and (x5) may be used alone, or a combination of two or more types may be used.

Note that the reaction product (X) may be a reaction product that is obtained by reacting, in addition to the components (x1) to (x5), another component within a scope that does not hinder the effect of the present invention. Examples of the other component referred to here include aromatic dicarboxylic acids or derivatives thereof.

However, the usage amount of the "other component" is preferably 30 mass% or less, more preferably 10 mass% or less, and even more preferably 5 mass% or less of the total amount of the reaction components constituting the reaction product (X).

The reaction product of the components (x1) and (x2) and the at least one compound selected from the group consisting of the components (x3), (x4), and (x5) is obtained by using at least one compound selected from the group consisting of the components (x3), (x4), and (x5) in combination with the component (x2) and reacting this combination with the component (x1), which is a polyamine compound. The reaction may be carried out by adding the components (x2) to (x5) in any order and reacting these components with the component (x1), or by mixing the components (x2) to (x5) and then reacting the mixture with the component (x1).

The reaction between the component (x1) and the component (x3) can be carried out under the same conditions as those of the reaction between the component (x1) and the component (x2). When the component (x3) is used, the component (x2) and the component (x3) may be mixed and then reacted with the component (x1), or the component (x1) and component (x2) may be first reacted and then reacted with the component (x3).

On the other hand, in a case where the component (x4) and/or the component (x5) is used, preferably, the components (x1) and (x2) are first reacted, and then further reacted with the component (x4) and/or the component (x5).

The reaction between the component (x1) and the component (x4) and/or the component (x5) is carried out by mixing the component (x1) and the component (x4) and/or the component (x5) at a temperature of from 25 to 200°C, and then carrying out an addition reaction at a temperature of from 30 to 180°C and preferably from 40 to 170°C. Furthermore, as necessary, a catalyst such as sodium methoxide, sodium ethoxide, and potassium t-butoxide can be used.

When the reaction is to be carried out, as necessary, the component (x4) and/or the component (x5) may be melted or diluted with a non-reactive solvent and used in order to facilitate the reaction.

Even for a case where the reaction product (X) is a reaction product of the components (x1) and (x2) and at least one compound selected from the group consisting of the components (x3), (x4), and (x5), the reaction molar ratio [(x2)/(x1)] of the component (x2) to the component (x1) is, for the same reason as described above, preferably in a range from 0.3 to 1.0, and more preferably in a range from 0.6 to 1.0. Meanwhile, the reaction molar ratio [{(x3) + (x4) + (x5)} /(x1)] of the components (x3), (x4), and (x5) to the component (x1) is preferably in a range from 0.05 to 3.1, more preferably in a range from 0.07 to 2.5, and even more preferably in a range from 0.1 to 2.0.

However, from viewpoints such as the gas barrier properties, workability, and pot life, the reaction molar ratio [{(x2) + (x3) + (x4) + (x5)}/(x1)] of the components (x2) to (x5) to the component (x1) is preferably in a range from 0.35 to 2.5 and more preferably in a range from 0.35 to 2.0.

The epoxy resin curing agent (B) may contain a curing agent component other than the reaction product (X). The "curing agent component other than the reaction product (X)" is a component other than the reaction product (X), the component having two or more functional groups that can react with the epoxy group in the epoxy resin (A), and from the viewpoints of reactivity with the epoxy resin (A) and the gas barrier properties, examples of preferable components thereof include, other than the component (x1), polyamine compounds having two or more amino groups per molecule, and modified products of the polyamine compounds.

Examples of polyamine compounds other than the component (x1) include chain-like aliphatic polyamine compounds, such as ethylene diamine, diethylene triamine, triethylene tetramine, tetraethylene pentamine, hexamethylene diamine, 2-methylpentamethylene diamine, and trimethylhexamethylene diamine; aromatic ring-containing aliphatic polyamine compounds, such as o-xylylenediamine; polyamine compounds having an alicyclic structure, such as isophoronediamine, 1,2-bis(aminomethyl)cyclohexane, 1,3-bis(aminomethyl)cyclohexane, 1,4-bis(aminomethyl)cyclohexane, mencene diamine, norbornane diamine, tricyclodecane diamine, adamantane diamine, diaminocyclohexane, 1,4-diamino-2-methylcyclohexane, 1, 4-diamino-3,6-diethylcyclohexane, diaminodiethylmethyl cyclohexane, 3,3'-dimethyl-4,4'-diaminodicylcohexyl methane, 3,3',5,5'-tetramethyl-4,4'-diaminodicyclohexyl methane, and 4,4'-diaminodicyclohexyl methane; aromatic polyamine compounds such as phenylene diamine, diaminodiphenyl methane, diaminodiphenylsulphone, diethyltoluene diamine, and 2,2'-diethyl-4,4'-methylene dianiline; polyamine compounds having a heterocyclic structure, such as N-aminoethyl piperazine, and N,N'-bis(aminoethyl)piperazine; and polyether polyamine compounds.

In addition, examples of modified products of the polyamine compound include a Mannich modified product,

an epoxy modified product, a Michael adduct, a Michael adduct/polycondensate, a styrene-modified product, and a polyamide modified product of the polyamine compound. One of these can be used alone, or two or more can be combined and used.

However, from the viewpoint of expressing high gas barrier properties and impact resistance in the prepreg and the composite material, the content of the reaction product (X) in the epoxy resin curing agent (B) is preferably high. From the abovementioned viewpoint, the content of the reaction product (X) in the epoxy resin curing agent (B) is preferably 50 mass% or more, more preferably 70 mass% or more, even more preferably 80 mass% or more, and yet even more preferably 90 mass% or more. Furthermore, the upper limit is 100 mass%.

The epoxy resin curing agent (B) may further contain a coupling agent. When the epoxy resin curing agent (B) contains a coupling agent, the interfacial adhesiveness of a cured product of the obtained epoxy resin composition (hereinafter, also referred to simply as an "epoxy resin cured product") to reinforcing fibers can be stabilized.

Examples of the coupling agent include silane coupling agents, titanate-based coupling agents, and aluminate-based coupling agents, and a silane coupling agent is preferable from the viewpoint of improving interfacial adhesiveness between the epoxy resin cured product and the reinforcing fibers and the pot life of the epoxy resin composition.

Examples of the silane coupling agent include a silane coupling agent having a vinyl group, a silane coupling agent having an amino group, a silane coupling agent having an epoxy group, a silane coupling agent having a (meth)acryl group, and a silane coupling agent having a mercapto group. Among these, from the viewpoints of the pot life of the epoxy resin composition and improvements in the interfacial adhesiveness between the epoxy resin composition and the reinforcing fibers, the silane coupling agent is preferably at least one selected from the group consisting of silane coupling agents having an amino group and silane coupling agents having an epoxy group.

When the epoxy resin curing agent (B) contains a coupling agent, from the viewpoint of obtaining the abovementioned effects, the content of the coupling agent in the epoxy resin curing agent (B) is preferably from 0.1 to 10 parts by mass, and more preferably from 1 to 8 parts by mass, per 100 parts by mass of the curing agent component in the epoxy resin curing agent (B).

The compounding ratio of the epoxy resin (A) and the epoxy resin curing agent (B) in the epoxy resin composition may be within the standard compounding range that is ordinarily used for a case where an epoxy resin reaction product is produced through a reaction between an epoxy resin and an epoxy resin curing agent. Specifically, a ratio (number of active amine hydrogens in the epoxy resin curing agent (B))/(number of epoxy groups in the epoxy resin (A)) of the number of active amine hydrogens in the epoxy resin curing agent (B) to the number of epoxy groups in the epoxy resin (A) is preferably in a range from 0.2 to 12.0. From the viewpoint of expressing high gas barrier properties and impact resistance in the prepreg and the composite material, the ratio of the (number of active amine hydrogens in the epoxy resin curing agent (B))/(number of epoxy groups in the epoxy resin (A)) is more preferably in a range from 0.4 to 10.0, even more preferably from 0.6 to 8.0, yet even more preferably from 0.9 to 6.0, and still more preferably more than 1.0 and 5.0 or less.

From the viewpoint of further improving impact resistance, the ratio of the (number of active amine hydrogens in the epoxy resin curing agent (B))/(number of epoxy groups in the epoxy resin (A)) is more preferably 1.1 or more, even more preferably 1.4 or more, and yet even more preferably 2.0 or more, and from the viewpoint of further improving the hydrogen gas barrier property, the ratio thereof is more preferably 4.0 or less, and even more preferably 3.2 or less.

(Solvent)

The epoxy resin composition used in the present invention preferably further contains a solvent from the viewpoint of reducing the viscosity of the composition and increasing impregnation properties for the reinforcing fibers.

As the solvent, a non-reactive solvent is preferable, and specific examples thereof include alcohol-based solvents, such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester-based solvents, such as ethyl acetate and butyl acetate; ketone-based solvents, such as acetone and methyl isobutyl ketone; ether-based solvents, such as diethyl ether and diisopropyl ether; and hydrocarbon-based solvents, such as toluene, and of these, a single type may be used, or two or more types may be used.

From the viewpoint of the solubility of the epoxy resin (A) and the epoxy resin curing agent (B) and the viewpoint of the ease of removing the solvent, the solvent is preferably at least one type selected from the group consisting of alcohol-based solvents, ester-based solvents, and hydrocarbon-based solvents, having 8 or less carbons, is more preferably at least one type selected from the group consisting of methanol, ethanol, 1-propanol, 2-propanol, 1-butanol, 2-butanol, ethyl acetate, and toluene, and is even more preferably at least one type selected from the group consisting of methanol and ethyl acetate.

When the epoxy resin composition contains a solvent, the content of the solvent is not particularly limited, but from the viewpoint of increasing the impregnation properties of the epoxy resin composition into the reinforcing fibers, the content of the solvent is preferably 5 mass% or more, more preferably 10 mass% or more, even more preferably 15

mass% or more, yet even more preferably 20 mass% or more, still even more preferably 30 mass% or more, and even more preferably 40 mass% or more, and from the viewpoint of ease of removing the solvent, the content of the solvent is preferably 95 mass% or less, more preferably 90 mass% or less, even more preferably 80 mass% or less, and yet even more preferably 70 mass% or less.

From a viewpoint such as improving the interfacial adhesiveness between the obtained cured product and the reinforcing fibers, the epoxy resin composition may further contain an unsaturated fatty acid amide having from 14 to 24 carbons (hereafter, also simply referred to as an "unsaturated fatty acid amide"). The unsaturated fatty acid constituting the unsaturated fatty acid amide may be a fatty acid having from 14 to 24 carbons with at least one unsaturated bond. The number of unsaturated bonds in the unsaturated fatty acid is preferably from 1 to 6, more preferably from 1 to 4, and even more preferably from 1 to 2.

Examples of the unsaturated fatty acid amide include preferably at least one selected from the group consisting of palmitoleic acid amide, oleic acid amide, eicosenoic acid amide, and erucic acid amide. When an unsaturated fatty acid amide having from 14 to 24 carbons is used, the content of the unsaturated fatty acid amide in the epoxy resin composition is preferably from 0.1 to 20 parts by mass, and more preferably from 0.2 to 15 parts by mass, per 100 parts by mass of the total amount of the epoxy resin (A) and the epoxy resin curing agent (B).

The epoxy resin composition can further contain non-spherical inorganic particles from the viewpoint of improving the gas barrier properties, etc. of the obtained prepreg and composite material.

The shape of the non-spherical inorganic particle is any three-dimensional shape other than spherical (substantially true spherical shape), and examples include a plate shape, a scale shape, a column shape, a chain shape, and a fibrous shape. A plurality of plate-shaped or scale-shaped inorganic particles may be laminated in a layer.

Examples of the inorganic substance constituting the non-spherical inorganic particle include silica, alumina, isinglass (mica), talc, aluminum, bentonite, and smectite. Among these, from the viewpoint of improving gas barrier properties and the like without impairing the effects of the present invention, the inorganic substance is preferably at least one selected from the group consisting of silica and alumina, and is more preferably silica.

The non-spherical inorganic particles may be surface treated as necessary for the purpose of increasing dispersibility in the epoxy resin composition.

The average particle size of the non-spherical inorganic particle is preferably from 1 to 2000 nm, more preferably from 1 to 1500 nm, even more preferably from 1 to 1000 nm, still more preferably from 1 to 800 nm, still even more preferably from 1 to 500 nm, still even more preferably from 5 to 300 nm, still even more preferably from 5 to 200 nm, still even more preferably from 5 to 100 nm, and still even more preferably from 8 to 70 nm. When the average particle size is 1 nm or more, it is easy to prepare the inorganic particles, and when the average particle size is 2000 nm or less, gas barrier properties and the like can be improved without impairing the effects of the present invention. Here, the average particle size is the average particle size of the primary particle.

When non-spherical inorganic particles are used, from the viewpoint of improving gas barrier properties and the like without impairing the effects of the present invention, the content of the non-spherical inorganic particles in the epoxy resin composition is preferably from 0.5 to 10.0 parts by mass, more preferably from 1.0 to 8.0 parts by mass, and even more preferably from 1.5 to 7.5 parts by mass, per 100 parts by mass of the total amount of the epoxy resin (A) and the epoxy resin curing agent (B).

However, from the viewpoint of a balance with impact resistance, the content of the non-spherical inorganic particles in the epoxy resin composition may be less than 5.0 parts by mass or 3.0 parts by mass or less, per 100 parts by mass of the total amount of the epoxy resin (A) and the epoxy resin curing agent (B).

The epoxy resin composition may contain, as necessary and within a range that does not impair the effects of the present invention, additives such as a thermosetting resin other than the epoxy resin (A), a reactive diluent, a non-reactive diluent other than the solvent, a curing accelerator, a wetting agent, a tackifier, an antifoaming agent, a rust-proofing agent, a lubricant, a pigment, an oxygen scavenger, a UV absorber, and an antioxidant.

When the epoxy resin composition contains an additive described above, the total content of these additives in the composition is preferably 20.0 parts by mass or less, and more preferably from 0.001 to 15.0 parts by mass, per 100 parts by mass of the total amount of the epoxy resin (A) and the epoxy resin curing agent (B).

In terms of obtaining the effects of the present invention, the total content of the epoxy resin (A) and the epoxy resin curing agent (B) in the solid content of the epoxy resin composition is preferably 60 mass% or more, more preferably 70 mass% or more, even more preferably 80 mass% or more, and yet even more preferably 85 mass% or more, and the upper limit is 100 mass%. The "solid content of the epoxy resin composition" means components excluding the water and solvent in the epoxy resin composition.

The epoxy resin composition can be prepared, for example, by blending a predetermined amount of each of the epoxy resin (A), the epoxy resin curing agent (B), the solvent, and additives that are used as necessary, and then stirring and mixing using a well-known method and apparatus.

The cured product of the epoxy resin composition used in the present invention has high gas barrier properties. For example, the hydrogen gas permeability coefficient of the cured product is preferably $8.0 \times 10^{-11}$ [$cc^3 \cdot cm/(cm^2 \cdot s \cdot cm$-

Hg)] or less, more preferably 6.0 $\times$ $10^{-11}$ [$cc^3 \cdot cm/(cm^2 \cdot s \cdot cmHg)$] or less, and even more preferably 4.5 $\times$ $10^{-11}$ [$cc^3 \cdot cm/(cm^2 \cdot s \cdot cmHg)$] or less.

The hydrogen gas permeability coefficient of the cured product of the epoxy resin composition can be measured by the method described in the examples under dry conditions at 23°C.

<Reinforcing fibers>

Examples of the form of the reinforcing fibers used in the present invention include short fibers, long fibers, and continuous fibers. Among these, from the viewpoint of using the prepreg and the composite material as a material constituting a high-pressure gas storage tank, long fibers or continuous fibers are preferable, and continuous fibers are more preferable.

Note that in the present specification, short fibers have a fiber length of from 0.1 mm to less than 10 mm, and long fibers have a fiber length of from 10 mm to 100 mm. In addition, continuous fibers also refer to a fiber bundle having a fiber length of more than 100 mm.

Examples of the shape of the continuous fibers include tow, sheet, and tape shapes, and the continuous fibers constituting a sheet or tape include, for example, unidirectional (UD) materials, textiles, and non-woven fabrics.

From the viewpoint of using the prepreg as a material constituting the outer layer of a high-pressure gas storage tank, the shape of the continuous fiber is preferably a tow or tape shape, and a tow shape is more preferable. From the viewpoint of easily obtaining a high strength and a high elastic modulus, the number of continuous fiber bundles (number of filaments) constituting the tow is preferably from 3K to 50K, and more preferably from 6K to 40K.

The average fiber length of the continuous fiber bundle of the reinforcing fibers is not particularly limited, but from the viewpoint of molding processability, the average fiber length is preferably from 1 to 10000 m, and more preferably from 100 to 10000 m.

From the viewpoint of molding processability and the viewpoint of easily obtaining a high strength and a high elastic modulus, the average fineness of the continuous fiber bundle is preferably from 50 to 2000 tex (g/1000 m), more preferably from 200 to 1500 tex, and even more preferably from 500 to 1500 tex.

Also, the average tensile modulus of the continuous fiber bundle is preferably from 50 to 1000 GPa.

Examples of materials of the reinforcing fibers include inorganic fibers, such as glass fibers, carbon fibers, metal fibers, boron fibers, and ceramic fibers; and organic fibers, such as aramid fibers, polyoxymethylene fibers, aromatic polyamide fibers, polyparaphenylene benzobisoxazole fibers, and ultra-high molecular weight polyethylene fibers. Among these, inorganic fibers are preferable from the viewpoint of obtaining a high strength, and at least one type of inorganic fiber selected from the group consisting of glass fibers and carbon fibers is more preferable because of the fibers being lightweight with high strength and a high elastic modulus, and carbon fibers are even more preferable.

Examples of carbon fibers include polyacrylonitrile-based carbon fibers and pitch-based carbon fibers. In addition, a carbon fiber made from a plant-derived raw material, such as lignin or cellulose, can also be used.

The reinforcing fibers used in the present invention may be treated with a treatment agent. Examples of the treatment agent include a surface treatment agent or a sizing agent.

Examples of the surface treatment agent include the coupling agents exemplified as optional components in the epoxy resin curing agent (B), and a silane coupling agent is preferable.

Examples of the silane coupling agent include, as similarly described above, a silane coupling agent having a vinyl group, a silane coupling agent having an amino group, a silane coupling agent having an epoxy group, a silane coupling agent having a (meth)acryl group, and a silane coupling agent having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and of these, a single sizing agent can be used, or two or more can be used in combination. Examples of combinations of two or more sizing agents include urethane/epoxy-based sizing agents, urethane/acrylic-based sizing agents, and urethane/carboxylic acid-based sizing agents.

An example of the urethane-based sizing agent is a urethane resin obtained through a reaction between a polyol and a polyisocyanate.

Examples of the polyol include polyester polyols such as polyethylene adipate diol, polybutylene adipate diol, polyethylene butylene adipate diol, polyneopentyl adipate diol, polyneopentyl terephthalate diol, polycaprolactone diol, polyvalerolactone diol, and polyhexamethylene carbonate diol; and polyether polyols, such as polyethylene glycol, polypropylene glycol, polyoxyethylene oxypropylene glycol, polyoxytetramethylene glycol, and ethylene oxide and/or propylene oxide adducts of bisphenols.

Examples of the polyisocyanate include aromatic polyisocyanates, such as, 2,4'-diphenylmethane diisocyanate or 4,4'-diphenylmethane diisocyanate (MDI), 2,4-tolylene diisocyanate or 2,6-tolylene diisocyanate (TDI), 4,4'-dibenzyl diisocyanate, 1,3-phenylene diisocyanate or 1,4-phenylene diisocyanate, 1,5-naphthylene diisocyanate, and xylylene diisocyanate; aliphatic polyisocyanates, such as ethylene diisocyanate, hexamethylene diisocyanate (HDI), and lysine

diisocyanate; and alicyclic polyisocyanates, such as isophorone diisocyanate (IPDI), and 4,4'-dicyclohexylmethane diisocyanate (H12MDI).

A single type or a combination of two or more of the abovementioned polyols and polyisocyanates can be used.

Examples of the epoxy-based sizing agent include epoxy resins having two or more epoxy groups per molecule. Specific examples include bisphenol A novolac-type epoxy resin, bisphenol F novolac-type epoxy resin, biphenyl-type bifunctional epoxy resin, biphenyl-modified novolac-type epoxy resin, bisphenol A-type epoxy resin, bisphenol F-type epoxy resin, naphthol-cresol co-condensed novolac-type epoxy resin, naphthol-phenol co-condensed novolac-type epoxy resin, dicyclopentadiene-phenol addition reaction-type epoxy resin, triphenylmethane-type epoxy resin, phenol novolac-type epoxy resin, cresol novolac-type epoxy resin, tetraphenylethane-type epoxy resin, and naphthol novolac-type epoxy resin. Among these, the epoxy resin is preferably an epoxy resin having a bisphenol structure such as bisphenol A or bisphenol F.

Examples of the acrylic-based sizing agent include acrylic resins, and specific examples include homopolymers of an acrylic monomer such as a (meth)acrylic acid and a (meth)acrylic acid ester, or copolymers thereof, and copolymers of the acrylic monomer and another monomer copolymerizable with the acrylic monomer.

Examples of the polyester-based sizing agent include polyester resins obtained by a polycondensation reaction between a polyol such as an aliphatic diol, an aromatic diol, or a trivalent or higher polyhydric alcohol, and a polycarboxylic acid such as an aliphatic dicarboxylic acid, an aromatic dicarboxylic acid, and a trivalent or higher polyvalent carboxylic acid.

Examples of the vinyl ester-based sizing agent include vinyl acetate resins, and specific examples include homopolymers of vinyl acetate, or copolymers of vinyl acetate and another monomer copolymerizable with the vinyl acetate.

Examples of the polyolefin-based sizing agent include polyolefin resins such as ultra-high molecular weight polyethylene resins, high-density polyethylene resins, low-density polyethylene resins, ultra-low density polyethylene resins, polypropylene resins, polystyrene resins, and polyethylene copolymers. Examples of the polyethylene copolymer include copolymers of ethylene and another monomer copolymerizable with ethylene, such as $\alpha$-olefins including, for example, propylene, butene-1, isoprene, and butadiene.

In addition, an acid-modified polyolefin resin obtained by modifying the abovementioned polyolefin resin with an acidic compound such as an unsaturated carboxylic acid or a carboxylic anhydride can also be used.

Examples of the polyether-based sizing agent include polyether resins having a polyoxyalkylene structure, such as polyalkylene glycol and a bisphenol A-alkylene oxide adduct.

Examples of the carboxylic acid based sizing agent include copolymers of a carboxylic anhydride-containing unsaturated vinyl monomer such as maleic anhydride, itaconic anhydride, or citraconic anhydride, and another unsaturated vinyl monomer such as styrene, $\alpha$-methylstyrene, ethylene, or butadiene.

Among these, from the viewpoints of improving the interfacial adhesiveness to the cured product of the epoxy resin composition and further improving the strength and impact resistance of the obtained prepreg and composite material, the reinforcing fibers are preferably treated with one or more types of sizing agents selected from the group consisting of urethane-based sizing agents, epoxy-based sizing agents, and urethane/epoxy-based sizing agents, and are more preferably treated with an epoxy-based sizing agent.

From the viewpoints of improving the interfacial adhesiveness to the cured product of the epoxy resin composition and further improving the strength and impact resistance of the obtained prepreg and composite material, the amount of the treatment agent is preferably from 0.001 to 5 mass%, more preferably from 0.1 to 3 mass%, and even more preferably from 0.5 to 2 mass%, relative to the amount of the reinforcing fibers.

Commercially available products can be also used as the reinforcing fibers. Examples of commercially available products of carbon fibers that are continuous fibers include Torayca (trade name) yarns of the series "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", and Torayca (trade name) fabrics of the series "CO6142", "C06151B", "C06343", "C06343B", "C06347B", "C06644B", "CK6244C", "CK6273C", and "CK6261C", the "UT70" series, the "UM46" series, and the "BT70" series, available from Toray Industries, Inc.

<Content>

The content of the reinforcing fibers in the prepreg of the present invention is not particularly limited, but from the viewpoint of obtaining a high strength and a high elastic modulus, the volume fraction of reinforcing fibers in the prepreg is preferably in a range of 0.10 or more, more preferably 0.20 or more, even more preferably 0.30 or more, and yet even more preferably 0.40 or more. In addition, from the viewpoints of gas barrier properties, impact resistance, and molding processability, the content of the reinforcing fibers is preferably in a range of 0.98 or less, more preferably 0.95 or less, even more preferably 0.80 or less, and yet even more preferably 0.70 or less.

A volume fraction $Vf_1$ of the reinforcing fibers in the prepreg can be calculated from the following equation.

$Vf_1$ = {(mass (g) of reinforcing fibers)/(specific gravity of reinforcing fibers)} ÷ [{(mass (g) of reinforcing fibers)/(specific gravity of reinforcing fibers)} + {(mass (g) of solid content of infiltrated epoxy resin composition)/(specific gravity of solid content of epoxy resin composition)}]

In addition, from the viewpoint of obtaining the effects of the present invention, the total content of the solid content of the epoxy resin composition and the reinforcing fibers constituting the prepreg of the present invention is preferably 70 mass% or more, more preferably 80 mass% or more, and even more preferably 90 mass% or more, and the upper limit is 100 mass%.

The shape of the prepreg of the present invention can be selected, as appropriate, according to the form of the reinforcing fibers to be used and the application, and examples thereof include tow, sheet, and tape shapes. Examples of the type of prepreg constituting the sheet or tape include unidirectional (UD) materials, textiles, and non-woven fabrics.

For example, when the prepreg of the present invention is used as a material constituting an outer layer of a high-pressure gas storage tank, from the viewpoint of forming the outer layer according to a method described below, the prepreg is preferably shaped as a tow prepreg or a tape-like prepreg, and more preferably a tow prepreg.

The method for producing the prepreg of the present invention is not particularly limited, and the prepreg can be produced according to a typical method. For example, the prepreg can be obtained by impregnating reinforcing fibers with the epoxy resin composition containing the epoxy resin (A), the epoxy resin curing agent (B), and a solvent, and then subjecting the resulting material to a drying step to remove the solvent.

Note that from the viewpoint of producing a prepreg that has minimal occurrence of voids, pinholes, and the like during molding and exhibits excellent resin adhesiveness when used in winding and molding, the prepreg of the present invention is preferably produced by a below-described production method according to the second invention.

[Method for producing prepreg]

The method for producing a prepreg according to the second invention (hereinafter, the method for producing a prepreg according to the second invention may be referred to simply as the "production method of the present invention") is characterized by including, in order, the following steps (I) to (III).

Step (I): Preparing an epoxy resin composition containing an epoxy resin (A), an epoxy resin curing agent (B) containing a reaction product (X) of a component (x1) and a component (x2) described below, and a solvent.

(x1) At least one selected from the group consisting of meta-xylylenediamine and para-xylylenediamine.
(x2) At least one selected from the group consisting of unsaturated carboxylic acids represented by General Formula (1) below and derivatives thereof.

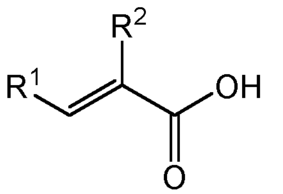

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

Step (II): Impregnating reinforcing fibers with the epoxy resin composition to obtain an undried prepreg.
Step (III): Drying the undried prepreg under conditions satisfying Relational Expression (i) below, to remove the solvent.

$$8000 \leq (K \times T)/W \leq 30000 \cdots (i)$$

K: drying temperature (K)
T: drying time (seconds)
W: thickness (mm) of undried prepreg

The undried prepreg described above means a prepreg prior to drying, the prepreg being subjected to step (III), and the thickness of the undried prepreg means the length of the shortest portion of the outer diameter in a cross section perpendicular to the longitudinal direction of the undried prepreg.

The production method of the present invention includes the steps (I) to (III) described above in this order, and thereby can be used to produce a prepreg that has minimal occurrence of voids, pinholes, and the like during molding and exhibits excellent resin adhesiveness when used in winding and molding.

The reason why the production method of the present invention exhibits the abovementioned effect is not clear but is assumed to be as follows.

The epoxy resin composition containing the epoxy resin curing agent (B) containing the reaction product (X) and used in the present invention has high gas barrier properties, such as a hydrogen gas barrier property, and rapid curability.

From the viewpoint of increasing impregnation properties for the reinforcing fibers, the epoxy resin composition used in the fiber-reinforced prepreg is preferably used after being diluted with a solvent or the like. In order to suppress the occurrence of voids and pinholes originating from residual solvent during molding, heating and drying are ordinarily implemented to remove the solvent after the reinforcing fibers have been impregnated with the epoxy resin composition containing the solvent. However, it known that when a rapid-curing epoxy resin composition is used, curing of the epoxy resin composition also proceeds during heating and drying, which is a problem. For example, when molding is implemented through a method such as filament winding using a fiber-reinforced prepreg in which continuous reinforcing fibers are used, curing of the epoxy resin composition proceeds prior to molding, resulting in a problem of a decrease in resin adhesiveness after winding.

In view of the above, the present inventors conducted an examination, and as a result, discovered that the abovementioned problem can be solved by setting, to a predetermined range, a ratio of a product of the drying temperature and drying time to the thickness of the undried prepreg in drying conditions when removing the solvent contained in the epoxy resin composition that is used to produce the prepreg. It is thought that when $(K \times T)/W$ in Relational Expression (i) is 8000 or more, the solvent in the prepreg is sufficiently removed, and a prepreg having less occurrence of voids, pinholes, or the like during molding can be formed. Furthermore, it is thought that if $(K \times T)/W$ in Relational Expression (i) is 30000 or less, even with a prepreg obtained using the epoxy resin composition as a matrix resin, curing during solvent drying does not excessively proceed, and a decrease in resin adhesiveness after winding can be suppressed.

The shape of the prepreg obtained by the production method of the present invention and the preferred aspect thereof are the same as those described above.

When the prepreg is used in the production of a high-pressure gas storage tank, from the viewpoint of producing the high-pressure gas storage tank through a below-described method, the prepreg is preferably shaped as a tow prepreg or a tape-like prepreg, and more preferably as a tow prepreg.

<Step (I)>

In step (I), an epoxy resin composition containing an epoxy resin (A), an epoxy resin curing agent (B) containing a reaction product (X) of a component (x1) and a component (x2) described below, and a solvent is prepared.

(x1) At least one selected from the group consisting of meta-xylylenediamine and para-xylylenediamine.

(x2) At least one selected from the group consisting of unsaturated carboxylic acids represented by General Formula (1) below and derivatives thereof.

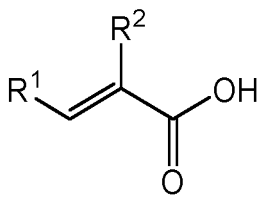

(1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

The epoxy resin composition has high gas barrier properties such as a hydrogen gas barrier property and can express high impact resistance when used in a prepreg and a fiber-reinforced composite material that is a cured product thereof. Therefore, the prepreg produced by the production method of the present invention is suitably used for producing the high-pressure gas storage tank described below.

The epoxy resin composition and the preparation method thereof, as well as preferred aspects thereof, are the same as those described above with the exception that a solvent is contained as an essential component.

<Step (II)>

In step (II), reinforcing fibers are impregnated with the epoxy resin composition obtained in step (I), and an undried prepreg is obtained.

Examples of the form of the reinforcing fibers include short fibers, long fibers, and continuous fibers. Among these, from the viewpoint of using the obtained prepreg as a material constituting the high-pressure gas storage tank described below, long fibers or continuous fibers are preferable, and continuous fibers are more preferable. Continuous fibers and suitable aspects thereof are the same as those described above.

In step (II), the method of impregnating the reinforcing fibers with the epoxy resin composition is not particularly limited, and the impregnation can be implemented using a known methods as appropriate, according to the form of reinforcing fibers or the like. For example, in a case where a tow prepreg is to be produced, a method of immersing, in a resin bath filled with the epoxy resin composition, a continuous fiber bundle unwound from a roll, and impregnating the continuous fiber bundle with the composition, and then pulling the impregnated continuous fiber bundle from the resin bath can be used. Subsequently, a step of removing the excess epoxy resin composition using squeeze rollers or the like is preferably implemented.

Impregnation with the epoxy resin composition can also be implemented under pressurized conditions or reduced pressure conditions, as necessary.

The content of reinforcing fibers in the undried prepreg is not particularly limited, but from the viewpoint of obtaining a high strength and a high elastic modulus in the obtained prepreg and fiber-reinforced composite, which is a cured product of the prepreg, a volume fraction $Vf_2$ of the reinforcing fibers in the undried prepreg is preferably in a range of 0.05 or more, more preferably 0.10 or more, even more preferably 0.20 or more, yet even more preferably 0.30 or more, and still even more preferably 0.40 or more. In addition, from the viewpoints of gas barrier properties, impact resistance, and molding processability, the content of the reinforcing fibers is preferably in a range of 0.95 or less, more preferably 0.80 or less, even more preferably 0.70 or less, and yet even more preferably 0.65 or less.

The volume fraction $Vf_2$ of reinforcing fibers in the undried prepreg can be calculated from the following equation, and specifically can be determined through the method described in the examples.

$$Vf_2 = \{(\text{mass (g) of reinforcing fibers})/(\text{specific gravity of reinforcing fibers})\} \div [\{(\text{mass (g) of reinforcing fibers})/(\text{specific gravity of reinforcing fibers})\} + \{(\text{mass (g) of infiltrated epoxy resin composition})/(\text{specific gravity of epoxy resin composition})\}]$$

<Step (III)>

In step (III), the undried prepreg obtained in step (II) is dried under conditions satisfying Relational Expression (i) below, to remove the solvent. Through this, a prepreg that has minimal occurrence of voids, pinholes, and the like during molding and exhibits excellent resin adhesiveness when used in winding and molding can be produced.

$$8000 \leq (K \times T)/W \leq 30000 \cdots \text{(i)}$$

K: drying temperature (K)
T: drying time (seconds)
W: thickness (mm) of undried prepreg

From the viewpoint of sufficiently removing the solvent and suppressing the occurrence of voids, pinholes, or the like during molding, the value of (K × T)/W in Relational Expression (i) above is 8000 or more, preferably 8500 or more, and more preferably 9000 or more. Furthermore, from the viewpoints of ensuring that curing of the epoxy resin composition does not proceed excessively during drying and obtaining favorable resin adhesiveness when used in winding and molding, the value of (K × T)/W is 30000 or less, preferably 25000 or less, more preferably 20000 or less, even more preferably 15000 or less, and yet even more preferably 12000 or less.

From the viewpoint of sufficiently removing the solvent and suppressing the occurrence of voids, pinholes, and the like during molding, and the viewpoints of ensuring that curing of the epoxy resin composition does not proceed excessively during drying and being able to suppress a decrease in resin adhesiveness when used in winding and

molding, the drying temperature K in Relational Expression (i) above is preferably from 300 to 400 (K), more preferably from 320 to 380 (K), and even more preferably from 330 to 370 (K).

From the viewpoint of sufficiently removing the solvent and suppressing the occurrence of voids, pinholes, and the like during molding, the drying time T in Relational Expression (i) above is preferably 10 seconds or more and more preferably 20 seconds or more. In addition, from the viewpoints of ensuring that curing of the epoxy resin composition does not proceed excessively when drying, and suppressing a decrease in resin adhesiveness when used in winding and molding, the drying time T is preferably 220 seconds or shorter and more preferably 200 seconds or shorter.

In Relational Expression (i) above, the thickness W of the undried prepreg varies depending on the form of the prepreg, but, for example, when the prepreg is a tow prepreg, the thickness W is typically from 0.1 to 20 mm, and from the viewpoint of using the prepreg as a material constituting a high-pressure gas storage tank, the thickness W is preferably from 0.2 to 10 mm, more preferably from 0.5 to 5 mm, and even more preferably from 0.5 to 3 mm.

The thickness W of the undried prepreg can be measured specifically by the method described in the examples.

The undried prepreg can be dried by a known method using a hot air dryer, a heater, a heating roll, a hot plate, or the like. Examples of drying methods include a method of passing an undried prepreg through a heating atmosphere using a hot air dryer, a heater, or the like, and a method of contacting an undried prepreg with a heating body such as a heating roll or a hot plate.

A suitable range of the content of the reinforcing fibers in the prepreg obtained through step (III), and a suitable range of the total content of the solid content of the epoxy resin composition and the reinforcing fibers constituting the prepreg obtained through step (III) are the same as those described above.

The prepreg obtained through step (III) may be wound, etc. and used as a prepreg product, or may be continuously supplied for the production of a fiber-reinforced composite material after the implementation of step (III), without being subjected to winding or the like.

[Fiber-reinforced composite material]

The fiber-reinforced composite material of the present invention is a cured product of a prepreg according to the first invention, and contains a cured product of the epoxy resin composition, which is a matrix resin, and reinforcing fibers. The epoxy resin composition and reinforcement fibers, and preferable aspects of these are the same as those described in regard to the prepreg.

The composite material is produced by pre-molding the prepreg of the present invention to a desired shape, and then curing the prepreg. For example, when the composite material of the present invention is to be used for a pipe, a shaft, a cylinder, a tank, or the like, a composite material of a desired shape can be produced by wrapping the above-described tow prepreg around the outer surface of a mandrel or liner, and then curing the tow prepreg.

In the production of the composite material, the method of curing the prepreg is not particularly limited, and the prepreg may be cured by a known method at a temperature and time sufficient for curing the epoxy resin composition contained in the prepreg. The curing conditions of the prepreg depend on details such as the thickness of the prepreg and the composite material to be formed, but for example, the curing temperature can be selected in a range from 10 to 140°C, and the curing time can be selected in a range from 5 minutes to 200 hours, and from the viewpoint of productivity, the curing temperature is preferably in a range from 80 to 120°C, and the curing time is preferably in a range from 10 minutes to 5 hours.

The composite material of the present invention is suitably used, for example, in a pipe, shaft, cylinder, tank, or the like, and because the composite material of the present invention excels in impact resistance and gas barrier properties such as a hydrogen gas barrier property, the composite material is particularly suitable as a material for forming an outer layer of a high-pressure gas storage tank described below.

[High-pressure gas storage tank]

A high-pressure gas storage tank of the present invention is obtained using the fiber-reinforced composite material. Use of the composite material for the high-pressure gas storage tank of the present invention yields excellent gas barrier properties such as a hydrogen gas barrier property, and excellent pressure resistance and impact resistance.

The high-pressure gas storage tank of the present invention may be constituted of only the composite material, or a portion of the tank may be constituted of the composite material. From the viewpoints of gas barrier properties such as a hydrogen gas barrier property, pressure resistance, impact resistance, and productivity, the high-pressure gas storage tank preferably includes a liner and an outer layer containing the fiber-reinforced composite material.

A high-pressure gas storage tank of the present invention including a liner and an outer layer containing the fiber-reinforced composite material is described below with reference to the drawings.

FIG. 1 is a cross-sectional schematic view illustrating an embodiment of a high-pressure gas storage tank of the present invention, and a high-pressure gas storage tank 10 includes a liner 1 and an outer layer 2. The liner 1 is a

pressure-resistant member provided with a space to be filled with a gas therein, and is usually formed in a hollow shape. The outer layer 2 includes the fiber-reinforced composite material of the present invention, and is formed to cover the outer surface of the liner 1.

A mouthpiece 3 has, for example, a substantially cylindrical shape, and is fitted and fixed between the liner 1 and the outer layer 2. A substantially cylindrically-shaped opening of the mouthpiece 3 functions as an opening of the high-pressure gas storage tank 10. The mouthpiece 3 may be formed from another metal such as stainless steel or aluminum, or may be made of resin.

A boss 4 is, for example, made from aluminum, is assembled with a portion thereof being exposed externally, and serves to guide heat generation and heat absorption within the tank to the outside.

A valve 5 has, for example, a shape in which male threads are formed in a cylindrical portion, and is screwed together with female threads formed in an inner surface of the mouthpiece 3, and thereby the opening of the mouthpiece 3 is closed by the valve 5. Note that in the high-pressure gas storage tank of the present invention, the mouthpiece 3, the boss 4, and the valve 5 can be replaced by other means.

<Liner>

Examples of the material of the liner 1 constituting the high-pressure gas storage tank 10 include a liner containing a resin as a main component (hereinafter, "resin liner"), and a liner containing a metal as a main component (hereinafter "metal liner"). A resin liner is preferably used in a vehicle-mounted tank or the like in which a weight reduction is required.

The resin used in the resin liner is not particularly limited as long as it is a resin that excels in pressure resistance and gas barrier properties such as a hydrogen gas barrier property, and examples of the resin include a thermoplastic resin, a cured product of a thermosetting resin, and a cured product of a photocurable resin. Among these, a thermoplastic resin is preferable from the viewpoint of being able to easily mold the liner.

Examples of the thermoplastic resin include a polyamide resin, a polyester resin, a polyolefin resin, a polyimide resin, a polycarbonate resin, a polyether imide resin, a polyamide imide resin, a polyphenylene ether imide resin, a polyphenylene sulfide resin, a polysulfone resin, a polyester sulfone resin, a polyarylate resin, a liquid crystal polymer, a polyether ether ketone resin, a polyether ketone resin, a polyether ketone ketone resin, a polyether ether ketone ketone resin, and a polybenzimidazole resin, and of these, a single type may be used, or two or more types may be combined and used.

From the viewpoints of pressure resistance and gas barrier properties such as a hydrogen gas barrier property, among these thermoplastic resins, the thermoplastic resin is preferably at least one selected from the group consisting of polyamide resins and polyolefin resins, and is more preferably a polyamide resin.

From the viewpoints of pressure resistance and gas barrier properties such as a hydrogen gas barrier property, the polyamide resin is preferably a polyamide resin that contains a diamine-derived constituent unit and a dicarboxylic acid-derived constituent unit, with 50 mol% or more of the diamine-derived constituent units being derived from xylene diamine. Specific examples include the polyamide resins described in Patent Document 2 (WO 2016/084475).

Examples of polyolefin resins include polyethylene resins such as low-density polyethylene, medium-density polyethylene, high-density polyethylene, and linear low density polyethylene.

The resin liner may contain reinforcing fibers from the viewpoint of obtaining a high strength and a high elastic modulus. As the reinforcing fibers, the same reinforcing fibers as those exemplified with regard to the prepreg can be used, and carbon fibers are preferable from the viewpoint of obtaining a lightweight property, a high strength, and a high elastic modulus.

When the resin liner contains reinforcing fibers, from the perspective of obtaining a high strength and a high elastic modulus, the content of the reinforcing fibers is such that the volume fraction of the reinforcing fibers in the resin liner is in a range of preferably 0.10 or more, more preferably 0.20 or more, even more preferably 0.30 or more, and even more preferably 0.40 or more. In addition, from the viewpoints of gas barrier properties, impact resistance, and molding processability, the content of the reinforcing fibers is preferably in a range of 0.98 or less, more preferably 0.95 or less, even more preferably 0.80 or less, and yet even more preferably 0.70 or less.

In addition, from the viewpoint of increasing impact resistance, the resin liner can also contain an elastomer component. Examples of the elastomer component include polyolefin-based elastomers, diene-based elastomers, polystyrene-based elastomers, polyamide-based elastomers, polyester-based elastomers, polyurethane-based elastomers, fluorine-based elastomers, and siliconbased elastomers, other than the abovementioned thermoplastic resin. The elastomer component may also be a modified elastomer obtained by modifying these elastomers by an $\alpha,\beta$-unsaturated carboxylic acid or acid anhydride thereof, an acrylamide or derivatives thereof, or the like in the presence or absence of a radical initiator. A single type of elastomer component may be used alone or two or more types may be combined and used.

When the resin liner contains an elastomer component, from the viewpoint of enhancing the impact resistance

while maintaining gas barrier properties, the content of the elastomer component in the resin liner is in a range of preferably from 5 to 20 mass% and more preferably from 10 to 15 mass%.

Examples of the metal used in the metal liner include light alloys, such as an aluminum alloy or a magnesium alloy.

The thickness of the liner can be appropriately selected according to the capacity, shape, and the like of the high-pressure gas storage tank, but from the viewpoint of pressure resistance and gas barrier properties such as a hydrogen gas barrier property, the thickness of the liner is preferably 100 μm or more, more preferably 200 μm or more, and even more preferably 400 μm or more, and from the viewpoint of reducing the size and weight of the high-pressure gas storage tank, the thickness of the liner is preferably 60 mm or less, and more preferably 40 mm or less.

<Outer layer>

The outer layer 2 constituting the high-pressure gas storage tank 10 is not particularly limited as long as the outer layer 2 includes the fiber-reinforced composite material.

From the viewpoints of impact resistance and gas barrier properties such as a hydrogen gas barrier property, the content of the fiber-reinforced composite material in the material constituting the outer layer is preferably 50 mass% or more, more preferably 70 mass% or more, even more preferably 80 mass% or more, and yet even more preferably 90 mass% or more, and the upper limit is 100 mass%. From the viewpoints of impact resistance, gas barrier properties such as a hydrogen gas barrier property, and moldability, the outer layer is preferably constituted from only the fiber-reinforced composite material of the present invention.

In the outer layer, the reinforcing fibers in the fiber-reinforced composite material are preferably arranged in a regular manner. Being regularly arranged means that 50 mass% or more, and preferably 70 mass% or more of the reinforcing fibers contained in the outer layer are aligned with constant directionality. Examples of constant directionality include in a spiral shape, in a longitudinal direction, in a lateral direction, or a combination thereof.

Note that in the present specification, the spiral shape, the longitudinal direction, and the lateral direction are intended to include, in addition to a strict arrangement in a spiral-shape or the like, a degree of error generally interpreted by a person skilled in the art.

The thickness of the outer layer can be appropriately selected according to the capacity, shape, and the like of the high-pressure gas storage tank, but from the viewpoint of imparting impact resistance and high gas barrier properties, the thickness of the outer layer is preferably 100 μm or more, more preferably 200 μm or more, and even more preferably 400 μm or more, and from the viewpoint of reducing the size and weight of the high-pressure gas storage tank, the thickness of the outer layer is preferably 80 mm or less, and more preferably 60 mm or less.

Examples of aspects of the outer layer 2 include, as illustrated in FIG. 1, an aspect in which the outer layer 2 is formed so as to cover an outer surface of a body portion of the liner 1 with the fiber-reinforced composite material without any gaps.

The outer layer may be provided directly on the outer surface of the liner. Alternatively, one or more other layers may be provided on the outer surface of the liner, and the outer layer 2 may be provided on the surface of the other layers. For example, to improve adhesiveness between the liner and the outer layer, an adhesive layer may be provided between the liner and the outer layer.

In addition, any optional layer such as a protective layer, a paint layer, or a rust-preventing layer may be formed on the surface of the outer layer.

The gas to be stored in the high-pressure gas storage tank of the present invention may be any material that is a gas at 25°C and 1 atm, and examples thereof include hydrogen, oxygen, carbon dioxide, nitrogen, argon, LPG, alternative chlorofluorohydrocarbons, and methane. Among these, the gas is preferably hydrogen from the viewpoint of efficacy of the present invention.

The method for producing the high-pressure gas storage tank of the present invention is not particularly limited. For example, if a high-pressure gas storage tank constituted of only the fiber-reinforced composite material is to be produced, the high-pressure gas storage tank may be produced, for example, by a method in which a prepreg containing continuous fibers such as a tow prepreg is wrapped around an outer surface of a mold such as a balloon or ceramic and heated and cured, after which the mold is removed, or by a method in which molding is implemented by a 3D printer using the prepreg.

From the viewpoint of efficiently forming an outer layer that has minimal occurrence of voids, pinholes, or the like, and exhibits excellent resin adhesiveness, the high-pressure gas storage tank having the liner and the outer layer containing the fiber-reinforced composite material is preferably produced by the following production method according to the second invention.

[Method for producing high-pressure gas storage tank]

The second invention provides a method for producing a high-pressure gas storage tank including a liner and

an outer layer formed from a fiber-reinforced composite material, the production method including, in order, steps (Ia) to (IVa) described below.

Step (Ia): Preparing an epoxy resin composition containing an epoxy resin (A), an epoxy resin curing agent (B) containing a reaction product (X) of a component (x1) and a component (x2) described below, and a solvent.

(x1) At least one selected from the group consisting of meta-xylylenediamine and para-xylylenediamine.
(x2) At least one selected from the group consisting of unsaturated carboxylic acids represented by General Formula (1) below and derivatives thereof.

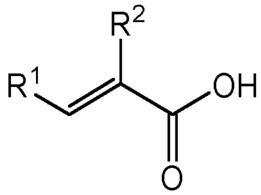 (1)

(In Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons.)

Step (IIa): Impregnating continuous reinforcing fibers with the epoxy resin composition to obtain an undried tow prepreg.
Step (IIIa): Drying the undried tow prepreg under conditions satisfying Relational Expression (ia) below to remove the solvent and obtain a tow prepreg.

$$8000 \leq (K \times T)/Wa \leq 30000 \cdots (ia)$$

K: drying temperature (°C)
T: drying time (seconds)
Wa: thickness (mm) of undried tow prepreg

Step (IVa): Wrapping the tow prepreg around an outer surface of the liner and then heating to form the outer layer formed from the fiber-reinforced composite material.

According to the production method described above, in a high-pressure gas storage tank having a liner and an outer layer made of a fiber-reinforced composite material, the outer layer can be efficiently formed with excellent resin adhesiveness and little occurrence of voids, pinholes, and the like.

<Step (Ia)>

In step (Ia), an epoxy resin composition containing an epoxy resin (A), an epoxy resin curing agent (B) containing a reaction product (X) of a component (x1) and a component (x2) described below, and a solvent is prepared.
The epoxy resin composition, the production method thereof, and preferred aspects of these are the same as described above.

<Step (IIa)>

In step (IIa), a continuous fiber bundle is impregnated with the epoxy resin composition obtained in step (Ia), and an undried tow prepreg is obtained.
The reinforcing fibers constituting the continuous fiber bundle and the preferred aspects thereof are also the same as those described above, and at least one type selected from the group consisting of glass fibers and carbon fibers is preferred, and carbon fibers are more preferable.
The continuous fiber bundle can be impregnated with the epoxy resin composition in the same manner as in step (II) of the method for producing the prepreg. Examples of such methods include a method of immersing, in a resin bath filled with the epoxy resin composition, a continuous fiber bundle unwound from a roll, and impregnating the continuous fiber bundle with the composition, and then pulling the impregnated continuous fiber bundle from the resin

bath. Subsequently, a step of removing excess epoxy resin composition using squeeze rollers or the like is preferably implemented.

Impregnation with the epoxy resin composition can also be implemented under pressurized conditions or reduced pressure conditions, as necessary.

From the viewpoint of obtaining a high strength and a high elastic modulus in the obtained outer layer, the content of reinforcing fibers in the undried tow prepreg is such that a volume fraction $Vf_2$ of the reinforcing fibers in the undried tow prepreg is preferably in a range of 0.05 or more, more preferably 0.10 or more, even more preferably 0.20 or more, yet even more preferably 0.30 or more, and still even more preferably 0.40 or more. Furthermore, from the viewpoints of gas barrier properties and impact resistance of the obtained outer layer, and also molding processability, the content of the reinforcing fibers is preferably in a range of 0.95 or less, more preferably 0.80 or less, even more preferably 0.70 or less, and yet even more preferably 0.65 or less.

The volume fraction $Vf_2$ of the reinforcing fibers in the undried tow prepreg can be determined by the same method as described above.

<Step (IIIa)>

In step (IIIa), the undried tow prepreg obtained in step (IIa) is dried under conditions satisfying Relational Expression (ia) below to remove the solvent, and a tow prepreg is obtained. Through this, the resulting tow prepreg has minimal occurrence of voids, pinholes, or the like during molding and exhibits excellent resin adhesiveness when used in the winding and molding of the following step (IVa).

$$8000 \leq (K \times T)/Wa \leq 30000 \cdots \text{(ia)}$$

K: drying temperature (K)
T: drying time (seconds)
Wa: thickness (mm) of undried tow prepreg

The thickness of the undried tow prepreg means the length of the shortest portion of the outer diameter in a cross-section perpendicular to the longitudinal direction of the tow prepreg prior to drying, the tow prepreg being subjected to step (IIIa).

From the viewpoint of sufficiently removing the solvent and suppressing the occurrence of voids, pinholes, or the like during molding of the obtained tow prepreg, the value of (K × T)/Wa in Relational Expression (ia) above is 8000 or more, preferably 8500 or more, and more preferably 9000 or more. Furthermore, from the viewpoints of ensuring that curing of the epoxy resin composition does not proceed excessively during drying, and obtaining favorable resin adhesiveness when used in winding and molding in step (IVa), the value of (K × T)/Wa is 30000 or less, preferably 25000 or less, more preferably 20000 or less, even more preferably 15000 or less, and yet even more preferably 12000 or less.

From the viewpoint of sufficiently removing the solvent and suppressing the occurrence of voids, pinholes, and the like when molding the obtained tow prepreg, and the viewpoints of ensuring that curing of the epoxy resin composition does not proceed excessively during drying, and obtaining favorable resin adhesiveness when used in winding and molding in step (IVa), the drying temperature K in Relational Expression (ia) above is preferably from 300 to 400 (K), more preferably from 320 to 380 (K), and even more preferably from 330 to 370 (K).

From the viewpoint of sufficiently removing the solvent and suppressing the occurrence of voids, pinholes, and the like during molding of the obtained tow prepreg, the drying time T in Relational Expression (ia) above is preferably 10 seconds or more and more preferably 20 seconds or more. In addition, from the viewpoints of ensuring that curing of the epoxy resin composition does not proceed excessively when drying, and obtaining favorable resin adhesiveness when used in winding and molding in step (IVa), the drying time T is preferably 220 seconds or shorter and more preferably 200 seconds or shorter.

From the viewpoint of forming the outer layer of the high-pressure gas storage tank, the thickness Wa of the undried tow prepreg in Relational Expression (ia) above is typically from 0.1 to 20 mm, preferably from 0.2 to 10 mm, more preferably from 0.5 to 5 mm, and even more preferably from 0.5 to 3 mm.

The thickness Wa of the undried tow prepreg can be measured by the same method used to measure the thickness W of the undried prepreg.

The undried tow prepreg can be dried by a method similar to the method described in step (III). Examples of such drying methods include a method of passing an undried tow prepreg through a heating atmosphere using a hot air dryer, a heater, or the like, and a method of contacting an undried tow prepreg with a heating body such as a heating roll or a hot plate. Among these, a method of using a hot air dryer is preferable.

From the viewpoint of obtaining a high strength and a high elastic modulus in the obtained outer layer, the

content of the reinforcing fibers in the tow prepreg obtained through step (IIIa) is such that the volume fraction $Vf_1$ of reinforcing fibers in the prepreg is preferably in a range of 0.10 or more, more preferably 0.20 or more, even more preferably 0.30 or more, and yet even more preferably 0.40 or more. Furthermore, from the viewpoints of gas barrier properties and impact resistance of the obtained outer layer, and also molding processability, the content of the reinforcing fibers is preferably in a range of 0.98 or less, more preferably 0.95 or less, even more preferably 0.80 or less, and yet even more preferably 0.70 or less.

The tow prepreg obtained in the step (IIIa) may be wound, for example, or may be continuously supplied to step (IVa) without being subjected to winding or the like.

<Step (IVa)>

In step (IVa), the tow prepreg obtained in step (IIIa) is wrapped around an outer surface of the liner and then heated to form the outer layer formed from the fiber-reinforced composite material. Through this, a high-pressure gas storage tank including a liner and an outer layer made of the fiber-reinforced composite material can be produced. Note that in order to improve adherence between the liner and the outer layer, a step of providing one or more other layers in advance on the outer surface of the liner may be implemented.

The method for wrapping the tow prepreg around the outer surface of the liner is not particularly limited. For example, a known filament winding method can be used to wrap the tow prepreg in a spiral shape without any gaps so as to cover the outer surface of the liner. When the tow prepreg is to be applied to the outer surface of the liner, an adhesive or the like may be used as necessary.

Heating is implemented by a known method at a temperature and time sufficient for curing the epoxy resin composition contained in the tow prepreg. From the viewpoint of improving productivity, the heating temperature is preferably in a range from 80 to 120°C, and the heating time is preferably in a range from 10 minutes to 5 hours.

After the outer layer is formed as described above, another optional layer such as a protective layer, a paint layer, or a rust-preventing layer can be formed on the surface of the outer layer.

Examples

Next, the present invention will be described specifically with reference to examples. However, the present invention is not limited in any way by these examples.

Measurements and evaluations in the present examples were performed by the following methods.

<Hydrogen gas permeability coefficient [$cc^3 \cdot cm/(cm^2 \cdot s \cdot cmHg)$]>

A bar coater was used to apply an epoxy resin composition obtained in each example onto a smooth metal plate coated with a mold release agent. The epoxy resin composition was applied in a 200 mm square at a thickness of 100 μm and then heated and cured at 100°C for 5 minutes to produce a cured product. The hydrogen gas permeability coefficient of this cured product was measured in a dried state at 23°C using a water vapor permeability measuring device ("G2700 T•F", available from GTR Tec Corporation).

<Impact strength>

A notch-free test piece of a thickness of 1.0 mm and a size of 80 × 10 mm was produced by cutting from the composite materials obtained in each example. The Charpy impact value was measured flatwise in an environment having a temperature of 23±2°C and a humidity of 50±5% in accordance with JIS K7111-1:2012.

<Thickness of undried prepreg>

The thickness of the undried prepreg was measured using electronic calipers available from Mitutoyo Corporation.

<Presence or absence of void occurrence>

The prepreg (tow prepreg) obtained in each example was wrapped around the outer surface of a screw tube (volume: 110 mL, outer diameter Φ: 20.3 mm) available from As One Corporation such that a gap was not formed, after which the prepreg was heated and cured for 20 minutes in a hot air dryer at 100°C. The presence or absence of voids in the resin layer of the surface of the obtained cured product (fiber-reinforced composite material) was visually observed.

<Adhesiveness when winding>

After cooling of the prepreg obtained in each example to 23°C, the ability of the prepreg surface to adhere to the screw tube when the prepreg was wrapped around the screw tube in the same manner as described above was visually observed. The results of the adhesion evaluation according to the following criteria are presented in Table 1.

A: Prepreg is flexible at room temperature and can adhere to the screw tube.
B: Prepreg is flexible at room temperature, but cannot adhere to the screw tube.
C: Prepreg is not flexible at room temperature and cannot be wrapped around the screw tube.

Production Example 1

(Preparation of epoxy resin curing agent solution A)

A reaction vessel was charged with 1 mol of meta-xylylenediamine (MXDA). The temperature was raised to 60°C under a nitrogen stream, and 0.93 mol of methyl acrylate was added dropwise over 1 hour. The temperature was increased to 165°C while generated methanol was distilled off, and the temperature was then maintained at 165°C for 2.5 hours, and thereby an epoxy resin curing agent was obtained as a reaction product between the MXDA and the methyl acrylate. Methanol was then added dropwise to the epoxy resin curing agent over 1.5 hours, and an epoxy resin curing agent solution A containing 65 mass% of the epoxy resin curing agent and 35 mass% of methanol was obtained.

(Preparation of epoxy resin composition 1)

To 14.4 g of the obtained epoxy resin curing agent solution A, 1.5 g of methanol and 9.9 g of ethyl acetate as solvents, and, as an epoxy resin, 4.5 g of an epoxy resin ("TETRAD-X", available from Mitsubishi Gas Chemical Co., Inc.) having a glycidylamino group derived from meta-xylylenediamine [(number of active amine hydrogens in the epoxy resin curing agent)/(number of epoxy groups in the epoxy resin) = 1.2] were added and stirred, and an epoxy resin composition 1 having a solid content concentration of 40 mass% was prepared.

Production Example 2 (Preparation of epoxy resin composition 2)

An epoxy resin composition 2 having a solid content concentration of 40 mass% was prepared in the same manner as Production Example 1 with the exception that the ratio of the epoxy resin curing agent solution A to the TETRAD-X in Production Example 1 was changed to a ratio at which the (number of active amine hydrogens in the epoxy resin curing agent)/(number of epoxy groups in the epoxy resin) became 3.0.

Production Example 3 (Preparation of epoxy resin composition 3)

An epoxy resin composition 3 having a solid content concentration of 40 mass% was prepared in the same manner as Production Example 1 with the exception that the ratio of the epoxy resin curing agent solution A to the TETRAD-X in Production Example 1 was changed to a ratio at which the (number of active amine hydrogens in the epoxy resin curing agent)/(number of epoxy groups in the epoxy resin) became 5.0.

Comparative Production Example 1 (Preparation of comparative epoxy resin composition 1)

Amounts of 23.5 g of a bisphenol A type epoxy resin ("jER828", available from Mitsubishi Chemical Corporation) as an epoxy resin, 6.2 g of diamino diphenylmethane ((number of active amine hydrogens in the epoxy resin curing agent)/(number of epoxy groups in the epoxy resin) = 1.2) as an epoxy resin curing agent, and 20 g of methanol as a solvent were used. These components were compounded and stirred, and a comparative epoxy resin composition 1 having a solid content concentration of 40 mass% was prepared.

[First invention: prepreg and composite material]

Example 1-1 (Production and evaluation of prepreg and composite material)

Continuous carbon fibers ("Torayca Fabric UT70-30G", available from Toray Industries, Inc., unidirectional cloth, sheet thickness of 0.167 mm) of a size of 100 mm × 100 mm and a mass of 3 g were impregnated with the epoxy resin composition 1 obtained in Production Example 1, and an undried prepreg was thereby prepared. The impregnation

amount of the resin composition in the undried prepreg was 2.97 g, and the thickness of the undried prepreg was 0.95 mm. Next, the undried prepreg was heated and dried for 80 seconds in a hot air dryer at 80°C to produce a prepreg. The content of the continuous carbon fibers in the prepreg was 0.51 in terms of the volume fraction. The obtained prepreg was held in the hot air dryer at 100°C for 1 hour and cured, and a composite material was thereby produced. Various evaluations were then conducted by the abovementioned methods using the obtained composite material. The results are shown in Table 1.

Example 1-2

A prepreg and a composite material were produced by the same method as in Example 1-1 with the exception that the epoxy resin composition 2 obtained in Production Example 2 was used instead of the epoxy resin composition 1 used in Example 1-1, and the various evaluations were implemented by the methods described above. The results are shown in Table 1.

Example 1-3

A prepreg and a composite material were produced by the same method as in Example 1-1 with the exception that the epoxy resin composition 3 obtained in Production Example 3 was used instead of the epoxy resin composition 1 used in Example 1-1, and the various evaluations were implemented by the methods described above. The results are shown in Table 1.

Comparative Example 1-1

A prepreg and a composite material were produced by the same method as in Example 1-1 with the exception that the comparative epoxy resin composition 1 obtained in Comparative Example 1 was used instead of the epoxy resin composition 1 used in Example 1-1, and the various evaluations were implemented by the methods described above. The results are shown in Table 1.

[Table 1]

Table 1

| | Epoxy Resin Composition | | | | | Reinforcing Fibers | Evaluation Results |
|---|---|---|---|---|---|---|---|
| | No. | Epoxy Resin | Epoxy Resin Curing Agent | (Number of active amine hydrogens in component (B))/(Number of epoxy groups in component (A)) | Cured product hydrogen gas permeability coefficient [$cc^3 \cdot cm/(cm^2 \cdot s \cdot cmHg)$] | Type | Charpy Impact Value [$kJ/m^2$] |
| Example 1-1 | 1 | TETRAD-X | A | 1.2 | $3.9 \times 10^{-11}$ | UT70-30G | 87.9 |
| Example 1-2 | 2 | TETRAD-X | A | 3.0 | $4.5 \times 10^{-11}$ | UT70-30G | 92.5 |
| Example 1-3 | 3 | TETRAD-X | A | 5.0 | $7.7 \times 10^{-11}$ | UT70-30G | 98.3 |
| Comparative Example 1-1 | Comparison 1 | jER828 | Diamino diphenylmethane | 1.2 | $1.1 \times 10^{-10}$ | UT70-30G | 82.5 |

From Table 1, it is clear that the cured products of the epoxy resin compositions used in the prepregs and composites according to the first invention had low hydrogen gas permeability coefficients and excellent hydrogen gas barrier properties. It is also clear that the composite materials of the first invention exhibited excellent impact resistance compared to the composite material of Comparative Example 1-1.

[Second invention: Method for producing prepreg]

Example 2-1 (Production and evaluation of tow prepreg)

<Step (I)>

To 14.4 g of the epoxy resin curing agent solution A obtained in Production Example 1, 1.5 g of methanol and 9.9 g of ethyl acetate as solvents, and, as an epoxy resin, 4.5 g of an epoxy resin ("TETRAD-X", available from Mitsubishi Gas Chemical Co., Inc.) having a glycidylamino group derived from meta-xylylenediamine [(number of active amine hydrogens in the epoxy resin curing agent)/(number of epoxy groups in the epoxy resin) = 1.2] were added and stirred, and an epoxy resin composition 1 having a solid content concentration of 40 mass% was prepared.

The hydrogen gas permeability coefficient of a cured product of the epoxy resin composition 1 was measured by the method described above and was $3.9 \times 10^{-11}$ [$cc^3 \cdot cm/(cm^2 \cdot s \cdot cmHg)$].

<Step (II)>

An amount of 0.0914 g of a continuous carbon fiber bundle ("T700SC-12000", available from Toray Industries, Inc., number of filaments: 12K, tensile modulus: 230 GPa, fiber fineness: 800 tex) was immersed in a resin bath filled with the epoxy resin composition 1 obtained in step (I), and the continuous carbon fiber bundle was impregnated with the epoxy resin composition. Next, the continuous carbon fiber bundle was pulled up from the resin bath, and the excess composition was removed from the fiber bundle until the composition no longer dripped from the fiber bundle, and an undried prepreg was obtained. The mass of the undried prepreg was measured, and a value obtained by subtracting the mass of the continuous carbon fiber bundle from the mass of the undried prepreg was used as the impregnation amount of the epoxy resin composition 1. In addition, the thickness (W) of the undried prepreg was measured by the method described above, and the volume fraction $Vf_2$ of the carbon fiber bundle in the undried prepreg was calculated using a specific gravity of 1.8 for the continuous carbon fiber bundle and a specific gravity of 1.2 for the epoxy resin composition 1. The mass of the undried prepreg, the impregnation amount of the composition, the thickness (W) of the undried prepreg, and the volume fraction $Vf_2$ of the carbon fiber bundle were as presented in Table 2.

Next, the undried prepreg was heated and dried in a hot air dryer at 60°C (333 K) for 45 seconds, and a prepreg (tow prepreg) was produced. The various evaluations were conducted by the methods described above using the obtained prepreg. The results are shown in Table 2.

Example 2-2

A prepreg was produced by a method similar to that of Example 2-1 with the exception that the undried prepreg drying temperature of Example 2-1 was changed to 80°C (353 K), and the drying time was changed to 30 seconds, and the various evaluations were implemented by the methods described above. The results are shown in Table 2.

Example 2-3

A prepreg was produced by a method similar to that of Example 2-1 with the exception that the continuous carbon fiber bundle in Example 2-1 was changed to "T800SC-24000" (number of filaments: 24K, tensile modulus: 294 GPa, fiber fineness: 1030 tex) available from Toray Industries, Inc., and the undried prepreg drying time was changed to 75 seconds, and the various evaluations were implemented by the methods described above. The results are shown in Table 2.

Example 2-4

A prepreg was produced by a method similar to that of Example 2-3 with the exception that the undried prepreg drying temperature of Example 2-3 was changed to 80°C (353 K), and the drying time was changed to 60 seconds, and the various evaluations were implemented by the methods described above. The results are shown in Table 2.

Example 2-5

A prepreg was produced by a method similar to that of Example 2-4 with the exception that the undried prepreg drying time of Example 2-4 was changed to 180 seconds, and the various evaluations were implemented by the methods described above. The results are shown in Table 2.

Comparative Example 2-1

A prepreg was produced by a method similar to that of Example 2-2 with the exception that the undried prepreg drying time of Example 2-2 was changed to 15 seconds, and the various evaluations were implemented by the methods described above. The results are shown in Table 2.

Comparative Example 2-2

A prepreg was produced by a method similar to that of Comparative Example 2-1 with the exception that the undried prepreg drying time of Comparative Example 2-1 was changed to 240 seconds, and the various evaluations were implemented by the methods described above. The results are shown in Table 2.

Comparative Example 2-3

A prepreg was produced by a method similar to that of Example 2-4 with the exception that the undried prepreg drying time of Example 2-4 was changed to 45 seconds, and the various evaluations were implemented by the methods described above. The results are shown in Table 2.

Comparative Example 2-4

A prepreg was produced by a method similar to that of Comparative Example 2-3 with the exception that the undried prepreg drying time of Comparative Example 2-3 was changed to 240 seconds, and the various evaluations were implemented by the methods described above. However, with the prepreg obtained in Comparative Example 2-4, the adhesiveness of the resin of the prepreg surface was low, and the prepreg could not be wound and molded. Therefore, the presence or absence of the occurrence of voids after molding could not be evaluated.

[Table 2]

Table 2

| | Undried Prepreg | | | | | | | Solvent Drying Conditions | | | Evaluation Results | |
|---|---|---|---|---|---|---|---|---|---|---|---|---|
| | Epoxy Resin Composition | Carbon fiber bundle | Undried prepreg mass | Carbon fiber bundle mass | Composition impregnation amount | Carbon fiber bundle $Vf_2$ | Undried prepreg thickness (W) | Drying temperature (K) | Drying time (T) | Value of Relational Expression (i) | Presence/absence of void occurrence | Adhesiveness when winding |
| | | | g | g | g | | [mm] | K | sec | | | |
| Example 2-1 | 1 | T700SC-12000 | 0.1516 | 0.0914 | 0.0602 | 0.50 | 1.3 | 333 | 45 | 11527 | No | A |
| Example 2-2 | 1 | | 0.1699 | 0.0914 | 0.0785 | 0.44 | 1.1 | 353 | 30 | 9627 | No | A |
| Example 2-3 | 1 | T800SC-24000 | 0.0953 | 0.0579 | 0.0374 | 0.51 | 2.5 | 333 | 75 | 9990 | No | A |
| Example 2-4 | 1 | | 0.0861 | 0.0579 | 0.0282 | 058 | 2.5 | 353 | 60 | 8472 | No | A |
| Example 2-5 | 1 | | 0.0897 | 0.0579 | 0.0318 | 0.55 | 2.5 | 353 | 180 | 25416 | No | A |
| Comparative Example 2-1 | 1 | T700SC-12000 | 0.1622 | 0.0914 | 0.0708 | 0.46 | 1.2 | 353 | 15 | 4413 | Yes | A |
| Comparative Example 2-2 | 1 | | 0.1687 | 0.0914 | 0.0773 | 0.44 | 1.3 | 353 | 240 | 65169 | No | B |
| Comparative Example 2-3 | 1 | T800SC-24000 | 0.0912 | 0.0579 | 0.0333 | 0.54 | 2.5 | 353 | 45 | 6354 | Yes | A |
| Comparative Example 2-4 | 1 | | 0.0944 | 0.0579 | 0.0365 | 0.51 | 2.5 | 353 | 240 | 33888 | - | c |

From Table 2, it is clear that the prepregs obtained by the production method of the second invention had minimal occurrence of voids during molding and exhibited excellent resin adhesiveness when used in winding and molding.

Industrial Applicability

According to the first invention, a prepreg and a fiber-reinforced composite material that can achieve both impact resistance and gas barrier properties such as a hydrogen gas barrier property can be provided. The fiber-reinforced composite that is a cured product of the first invention exhibits high gas barrier properties and impact resistance, and for example, is suitable as a material constituting a high-pressure gas storage tank.

According to the second invention, a method for producing a prepreg that has minimal occurrence of voids, pinholes, and the like during molding and exhibits excellent resin adhesiveness when used in winding and molding, and a method for producing a high-pressure gas storage tank can be provided.

Reference Signs List

10 High-pressure gas storage tank
1 Liner
2 Outer Layer
3 Mouthpiece
4 Boss
5 Valve

**Claims**

1. A prepreg in which reinforcing fibers are impregnated with an epoxy resin composition comprising an epoxy resin (A) and an epoxy resin curing agent (B) comprising a reaction product (X) of a component (x1) and a component (x2):

   (x1) at least one selected from the group consisting of meta-xylylenediamine and para-xylylenediamine, and
   (x2) at least one selected from the group consisting of unsaturated carboxylic acids represented by General Formula (1) and derivatives thereof;

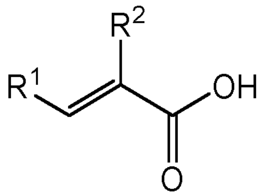

(1)

   (in Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons).

2. The prepreg according to claim 1, wherein the reinforcing fibers are long fibers or continuous fibers.

3. The prepreg according to claim 1 or 2, wherein the reinforcing fibers are at least one type selected from the group consisting of glass fibers and carbon fibers.

4. The prepreg according to any one of claims 1 to 3, wherein the epoxy resin (A) comprises, as a main component, an epoxy resin having a glycidylamino group derived from meta-xylylenediamine.

5. The prepreg according to any one of claims 1 to 4, wherein the component (x2) is at least one selected from the group consisting of acrylic acid, methacrylic acid, and alkyl esters thereof.

6. The prepreg according to any one of claims 1 to 5, wherein a reaction molar ratio [(x2)/(x1)] of the component (x2)

to the component (x1) is in a range from 0.3 to 1.0.

**7.** The prepreg according to any one of claims 1 to 6, wherein a ratio of the number of active amine hydrogens in the epoxy resin curing agent (B) to the number of epoxy groups in the epoxy resin (A) is more than 1.0 and 5.0 or less.

**8.** The prepreg according to any one of claims 1 to 7, wherein a hydrogen gas permeability coefficient of a cured product of the epoxy resin composition is $8.0 \times 10^{-11}$ [$cc^3 \cdot cm/(cm^2 \cdot s \cdot cmHg)$] or less.

**9.** A method for producing a prepreg, the method comprising steps (I) to (III):

Step (I): preparing an epoxy resin composition comprising an epoxy resin (A), an epoxy resin curing agent (B) comprising a reaction product (X) of a component (x1) and a component (x2), and a solvent:

(x1) at least one selected from the group consisting of meta-xylylenediamine and para-xylylenediamine, and
(x2) at least one selected from the group consisting of unsaturated carboxylic acids represented by General Formula (1) and derivatives thereof;

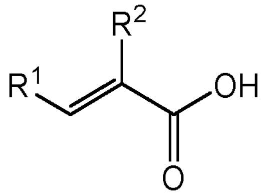 (1)

(in Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons)

Step (II): impregnating reinforcing fibers with the epoxy resin composition to obtain an undried prepreg;
Step (III): drying the undried prepreg under conditions satisfying Relational Expression (i), to remove the solvent:

$$8000 \leq (K \times T)/W \leq 30000 \cdots (i)$$

K: drying temperature (K)
T: drying time (seconds)
W: thickness (mm) of undried prepreg.

**10.** The method for producing a prepreg according to claim 9, wherein the solvent is at least one selected from the group consisting of methanol and ethyl acetate.

**11.** The method for producing a prepreg according to claim 9 or 10, wherein the drying temperature K in Relational Expression (i) is from 330 to 370 (K).

**12.** The method for producing a prepreg according to any one of claims 9 to 11, wherein a content of the solvent in the epoxy resin composition is from 15 to 80 mass%.

**13.** A fiber-reinforced composite material that is a cured product of the prepreg described in any one of claims 1 to 8.

**14.** A high-pressure gas storage tank in which the fiber-reinforced composite material described in claim 13 is used.

**15.** The high-pressure gas storage tank according to claim 14, wherein the high-pressure gas storage tank comprises a liner and an outer layer comprising the fiber-reinforced composite material.

**16.** A method for producing a high-pressure gas storage tank comprising a liner and an outer layer formed from a fiber-reinforced composite material, the method comprising, in order, steps (Ia) to (IVa):

Step (Ia): preparing an epoxy resin composition comprising an epoxy resin (A), an epoxy resin curing agent (B)

comprising a reaction product (X) of a component (x1) and a component (x2), and a solvent:

(x1) at least one selected from the group consisting of meta-xylylenediamine and para-xylylenediamine, and
(x2) at least one selected from the group consisting of unsaturated carboxylic acids represented by General Formula (1) and derivatives thereof;

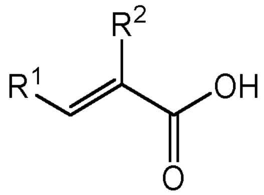

(1)

(in Formula (1), $R^1$ and $R^2$ each independently represent a hydrogen atom, an alkyl group having from 1 to 8 carbons, an aryl group having from 6 to 12 carbons, or an aralkyl group having from 7 to 13 carbons)

Step (IIa): impregnating continuous fiber bundles with the epoxy resin composition to obtain an undried tow prepreg;
Step (IIIa): drying the undried tow prepreg under conditions satisfying Relational Expression (ia) to remove the solvent and obtain a tow prepreg,

$$8000 \leq (K \times T)/Wa \leq 30000 \cdots \text{(ia)}$$

K: drying temperature (°C)
T: drying time (seconds)
Wa: thickness (mm) of undried tow prepreg;

Step (IVa): wrapping the tow prepreg around an outer surface of the liner and then heating to form the outer layer formed from the fiber-reinforced composite material.

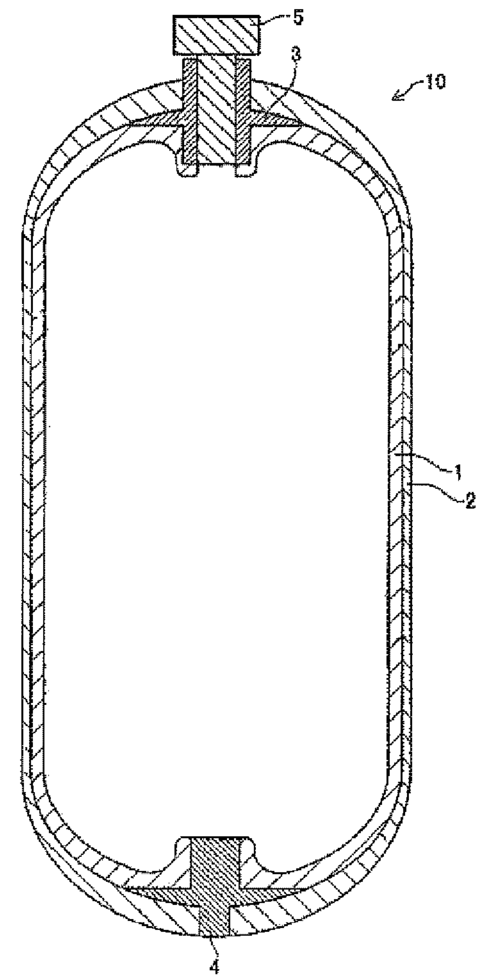


FIG. 1

## INTERNATIONAL SEARCH REPORT

International application No.
PCT/JP2021/009997

A. CLASSIFICATION OF SUBJECT MATTER
Int.Cl. C08G59/44(2006.01)i, C08J5/24(2006.01)i
FI: C08J5/24CFC, C08G59/44

According to International Patent Classification (IPC) or to both national classification and IPC

B. FIELDS SEARCHED
Minimum documentation searched (classification system followed by classification symbols)
Int.Cl. B29B11/16, 15/08-15/14, C08J5/04-5/10, 5/24, C08G59/00-59/72

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-026225 A (MITSUBISHI GAS CHEMICAL COMPANY, INC.) 29 January 2004 (2004-01-29), whole document, particularly, claims, examples | 1-16 |
| A | JP 2006-070125 A (ASAHI DENKA KOGYO KK) 16 March 2006 (2006-03-16), whole document, particularly, claims, examples | 1-16 |
| A | WO 2016/208344 A1 (MITSUBISHI GAS CHEMICAL COMPANY, INC.) 29 December 2016 (2016-12-29), whole document, particularly, claims | 1-16 |
| A | WO 2018/105282 A1 (MITSUBISHI GAS CHEMICAL COMPANY, INC.) 14 June 2018 (2018-06-14), whole document, particularly, claims | 1-16 |
| A | WO 2017/179358 A1 (MITSUBISHI GAS CHEMICAL COMPANY, INC.) 19 October 2017 (2017-10-19), whole document | 1-16 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 May 2021 | 01 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/009997

C (Continuation). DOCUMENTS CONSIDERED TO BE RELEVANT

| Category* | Citation of document, with indication, where appropriate, of the relevant passages | Relevant to claim No. |
|---|---|---|
| A | WO 2019/065248 A1 (NIPPON STEEL CHEMICAL & MATERIAL CO., LTD.) 04 April 2019 (2019-04-04), whole document | 1-16 |

Form PCT/ISA/210 (second sheet) (January 2015)

**INTERNATIONAL SEARCH REPORT**
Information on patent family members

International application No.
PCT/JP2021/009997

| | | |
|---|---|---|
| JP 2004-026225 A | 29 January 2004 | US 2005/0158494 A1<br>whole document, particularly, claims, examples<br>US 2009/0324865 A1<br>WO 2004/000681 A1<br>EP 1541489 A1<br>CN 1662425 A |
| JP 2006-070125 A | 16 March 2006 | (Family: none) |
| WO 2016/208344 A1 | 29 December 2016 | US 2018/0118877 A1<br>whole document, particularly, claims<br>EP 3315570 A1<br>CN 107614632 A<br>KR 10-2018-0022679 A<br>TW 201708429 A |
| WO 2018/105282 A1 | 14 June 2018 | US 2020/0071515 A1<br>whole document, particularly, claims<br>EP 3552821 A1<br>CN 110035893 A<br>KR 10-2019-0094157 A<br>TW 201825589 A |
| WO 2017/179358 A1 | 19 October 2017 | US 2019/0119435 A1<br>whole document<br>EP 3444291 A1<br>CN 108699221 A<br>KR 10-2018-0135893 A<br>TW 201736426 A |
| WO 2019/065248 A1 | 04 April 2019 | US 2020/0239625 A1<br>whole document<br>EP 3689937 A1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010276146 A
- WO 2016084475 A
- WO 2017175775 A